# EUROPEAN PATENT APPLICATION

(11) **EP 4 521 821 A1**
(43) Date of publication of application: **12.03.2025**
(21) Application number: 23799308.4
(22) Date of filing: 06.05.2023
(51) Int. Cl.: H04W 36/00

(54) **METHOD AND DEVICE FOR RELOCATING EDGE APPLICATION SERVER, AND NETWORK ELEMENT AND STORAGE MEDIUM**

(30) Priority: 06.05.2022 CN 202210488606
(71) Applicant: Datang Mobile Communications Equipment Co., Ltd., Beijing 100085 (CN)
(72) Inventor: TAO, Yuan, Beijing 100085 (CN); DUAN, Xiaoyan, Beijing 100085 (CN)
(74) Representative: Studio Torta S.p.A.
(86) International application number: PCT/CN2023/092488
(87) International publication number: WO 2023/213322

(57) **Abstract**

Embodiments of the present invention provide a method and device for relocating an edge application server (EAS), and a network element and a storage medium. The method comprises: receiving first indication information, the first indication information being used for indicating relocation of a source EAS of a first PLMN to a target EAS of a second PLMN; sending second indication information to a second SMF in the second PLMN; and after acknowledgement information sent by the second SMF is received, configuring a first routing rule for a first UPF in the first PLMN. According to the embodiments of the present invention, the first indication information is received, a first SMF sends the second indication information to the second SMF, then the first routing rule can be configured for the first UPF after the acknowledgement information is received, then uplink data can be forwarded to a second UPF, and the uplink data is routed to the target EAS by means of the second UPF.

## Description

### CROSS-REFERENCES TO RELATED APPLICATIONS

The present application claims priority to Chinese patent application No. 202210488606.9 filed on May 6, 2022, entitled "Method and Device for Relocating Edge Application Server, and Network Element and Storage Medium", which is hereby incorporated by reference in its entirety.

### FIELD

The present application relates to the field of radio communication, and in particular, to methods and apparatuses for relocating edge application server, network functions and a storage medium.

### BACKGROUND

With introduction of a federation of operator platforms, a mobile communication system allows an operator platform (OP) to deploy edge applications on other OPs, and a subscriber may obtain application services from other OPs through the OP it homes in. The OPs may belong to a same public land mobile network (PLMN) or different PLMNs.

In the related art, only the relocation between edge application servers (EASs) deployed in different edge host environments (EHEs) within the same PLMN is considered. However, when EAS relocation occurs between different PLMNs (OPs deployed in different PLMNs), service continuity cannot be guaranteed.

### BRIEF SUMMARY

Embodiments of the present application provide methods and apparatuses for relocating edge application server, network functions and a storage medium, to solve a defect in the related art that service continuity cannot be guaranteed when an edge application server (EAS) relocates between different public land mobile networks (PLMNs), and to relocate a source EAS to a target EAS in a second PLMN, which may ensure the service continuity.

An embodiment of the present application provides a method for relocating edge application server, performed by a first session management function (SMF), including:
receiving first indication information, where the first indication information is used to indicate to relocate a source edge application server (EAS) in a first public land mobile network (PLMN) to a target EAS in a second PLMN;
transmitting second indication information to a second SMF in the second PLMN, where the second indication information is determined based on the first indication information; and
configuring a first routing rule to a first user plane function (UPF) in the first PLMN after receiving acknowledgement information transmitted from the second SMF, where the first routing rule is used to route uplink (UL) data to a second UPF in the second PLMN.

In an embodiment, transmitting the second indication information to the second SMF in the second PLMN includes:
determining the second indication information based on the first indication information, where the second indication information is used to indicate to relocate the source EAS to the target EAS; and
transmitting the second indication information to the second SMF.

In an embodiment, the first UPF is a UPF that supports UL classifier (CL)/branching point (BP) or a UPF that supports protocol data unit (PDU) session anchor (PSA).

In an embodiment, configuring the first routing rule to the first UPF in the first PLMN includes:
in case that the first UPF is a UPF that supports UL CL/BP, configuring the first routing rule to the UPF that supports UL CL/BP based on the acknowledgement information transmitted from the second SMF; or
in case that the first UPF is a UPF that supports PSA, configuring the first routing rule to the UPF that supports PSA based on the acknowledgement information transmitted from the second SMF.

In an embodiment, before configuring the first routing rule to the UPF that supports UL CL/BP based on the acknowledgement information transmitted from the second SMF, the method further includes:
inserting or reselecting a UPF that supports UL CL/BP.

In an embodiment, the first indication information includes one or more types of the following information:
first information: an inter-PLMN relocation indication and/or an identifier (ID) of the second PLMN; or
second information: EAS Internet Protocol (IP) replacement information or information of the target EAS.

In an embodiment, receiving the first indication information includes:
receiving a policy and charging control (PCC) rule carrying the first indication information, where the PCC rule is generated by a policy control function (PCF) in the first PLMN.

In an embodiment, in case that the first indication information includes the second information, receiving the first indication information includes:
receiving the second information transmitted from an application function (AF) in the first PLMN.

In an embodiment, in case that the first indication information includes the second information, before transmitting the second indication information to the second SMF in the second PLMN, the method further includes:
determining a target data network access identifier (DNAI) based on the second information and Deployment information of EAS in the second PLMN;
transmitting a first request message carrying the target DNAI to a first access and mobility management function (AMF) in the first PLMN, where the first request message is used to request the first AMF to select an SMF in the second PLMN; and
determining the second SMF after receiving information of selected SMF transmitted from the first AMF.

In an embodiment, before transmitting the second indication information to the second SMF in the second PLMN, the method further includes:
in case that the second PLMN is a visited PLMN, transmitting a third request message to unified data management (UDM) in the first PLMN, where the third request message is used to request acknowledgement whether a user equipment (UE) is authorized to access the second PLMN; and
determining that the UE is authorized to access the second PLMN after receiving acknowledgement information replied from the UDM in the first PLMN.

An embodiment of the present application further provides a method for relocating edge application server, performed by a second session management function (SMF), including:
receiving second indication information transmitted from a first SMF in a first public land mobile network (PLMN), where the second indication information is used to indicate to relocate a source edge application server (EAS) in the first PLMN to a target EAS in a second PLMN;
configuring a second routing rule to the second user plane function (UPF) in the second PLMN based on the second indication information, where the second UPF is determined by the second SMF based on the second indication information, and the second routing rule is used to route uplink (UL) data to the target EAS; and
transmitting acknowledgement information to the first SMF.

In an embodiment, the second indication information includes one or more types of the following information:
first information: an inter-PLMN relocation indication; or
second information: EAS Internet Protocol (IP) replacement information or information of the target EAS.

In an embodiment, in case that the second indication information includes the second information, before configuring the second routing rule to the second UPF in the second PLMN based on the second indication information, the method further includes:
inserting or reselecting the second UPF based on the second information.

In an embodiment, after receiving the second indication information transmitted from the first SMF in the first PLMN, the method further includes:
in case that the second indication information includes the second information and the second information is the EAS IP replacement information, configuring the EAS IP replacement information to the second UPF.

In an embodiment, after receiving the second indication information transmitted from the first SMF in the first PLMN, the method further includes:
configuring a third routing rule to the second UPF in the second PLMN based on the second indication information, where the third routing rule is used to route downlink data to a first UPF in the first PLMN.

In an embodiment, the acknowledgement information includes tunnel information corresponding to the second UPF.

An embodiment of the present application further provides a method for relocating edge application server, performed by an application function (AF), including:
obtaining first indication information, where the first indication information is used to indicate to relocate a source edge application server (EAS) in a first public land mobile network (PLMN) to a target EAS in a second PLMN; and
transmitting the first indication information.

In an embodiment, the first indication information includes one or more types of the following information:
first information: an inter-PLMN relocation indication and/or an identifier (ID) of the second PLMN; or
second information: EAS Internet Protocol (IP) replacement information or information of the target EAS.

In an embodiment, transmitting the first indication information includes:
transmitting the first indication information to a network exposure function (NEF) in the first PLMN or a policy control function (PCF) in the first PLMN.

In an embodiment, transmitting the first indication information includes:
in case that the first indication information includes the second information, transmitting the second information to a first session management function (SMF) in the first PLMN.

In an embodiment, transmitting the first indication information includes:
in case that the first indication information includes the second information, transmitting the second information to a user equipment (UE) through an application layer.

An embodiment of the present application further provides a method for relocating edge application server, performed by a policy control function (PCF), including:
receiving first indication information, where the first indication information is used to indicate to relocate a source edge application server (EAS) in a first public land mobile network (PLMN) to a target EAS in a second PLMN; and
transmitting a policy and charging control (PCC) rule carrying the first indication information to a first session management function (SMF) in the first PLMN based on the first indication information.

In an embodiment, receiving the first indication information includes:
receiving the first indication information transmitted from an application function (AF) in the first PLMN; or
receiving the first indication information transmitted from a network exposure function (NEF) in the first PLMN.

In an embodiment, before transmitting the PCC rule carrying the first indication information to the first SMF in the first PLMN, the method further includes:
in case that the second PLMN is a visited PLMN, determining that a user equipment (UE) is authorized to access the visited PLMN, where the second PLMN is a PLMN where the target EAS is located; and
generating the PCC rule carrying the first indication information based on the first indication information.

In an embodiment, the first indication information includes one or more types of the following information:
first information: an inter-PLMN relocation indication and/or an identifier (ID) of the second PLMN; or
second information: EAS Internet Protocol (IP) replacement information or information of the target EAS.

An embodiment of the present application further provides a first session management function (SMF), including a memory, a transceiver, and a processor, where
the memory is used for storing a computer program; the transceiver is used for receiving and transmitting data under control of the processor; and the processor is used for reading the computer program in the memory and performing the steps of the method for relocating edge application server performed by the first SMF.

An embodiment of the present application further provides a second session management function (SMF), including a memory, a transceiver, and a processor, where
the memory is used for storing a computer program; the transceiver is used for receiving and transmitting data under control of the processor; and the processor is used for reading the computer program in the memory and performing the steps of the method for relocating edge application server performed by the second SMF.

An embodiment of the present application further provides an application function (AF), including a memory, a transceiver, and a processor, where
the memory is used for storing a computer program; the transceiver is used for receiving and transmitting data under control of the processor; and the processor is used for reading the computer program in the memory and performing the steps of the method for relocating edge application server performed by the AF.

An embodiment of the present application further provides a policy control function (PCF), including a memory, a transceiver, and a processor, where
the memory is used for storing a computer program; the transceiver is used for receiving and transmitting data under control of the processor; and the processor is used for reading the computer program in the memory and performing the steps of the method for relocating edge application server performed by the PCF.

An embodiment of the present application further provides an apparatus for relocating edge application server, used in a first session management function (SMF), including:
a first receiving unit, used for receiving first indication information, where the first indication information is used to indicate to relocate a source edge application server (EAS) in a first public land mobile network (PLMN) to a target EAS in a second PLMN;
a first transmitting unit, used for transmitting second indication information to a second SMF in the second PLMN, where the second indication information is determined based on the first indication information; and
a first configuring unit, used for configuring a first routing rule to a first user plane function (UPF) in the first PLMN after receiving acknowledgement information transmitted from the second SMF, where the first routing rule is used to route uplink (UL) data to a second UPF in the second PLMN.

An embodiment of the present application further provides an apparatus for relocating edge application server, used in a second session management function (SMF), including:
a second receiving unit, used for receiving second indication information transmitted from a first SMF in a first public land mobile network (PLMN), where the second indication information is used to indicate to relocate a source edge application server (EAS) in the first PLMN to a target EAS in a second PLMN;
a second configuring unit is used for configuring a second routing rule to the second user plane function (UPF) in the second PLMN based on the second indication information, where the second UPF is determined by the second SMF based on the second indication information, and the second routing rule is used to route uplink (UL) data to the target EAS; and
a second transmitting unit, used for transmitting acknowledgement information to the first SMF.

An embodiment of the present application further provides an apparatus for relocating edge application server, used in an application function (AF), including:
a second obtaining unit, used for obtaining first indication information, where the first indication information is used to indicate to relocate a source edge application server (EAS) in a first public land mobile network (PLMN) to a target EAS in a second PLMN; and
a third transmitting unit, used for transmitting the first indication information.

An embodiment of the present application further provides an apparatus for relocating edge application server, used in a policy control function (PCF), including:
a third receiving unit, used for receiving first indication information, where the first indication information is used to indicate to relocate a source edge application server (EAS) in a first public land mobile network (PLMN) to a target EAS in a second PLMN; and
a fourth transmitting unit, used for transmitting a policy and charging control (PCC) rule carrying the first indication information to a first session management function (SMF) in the first PLMN based on the first indication information.

An embodiment of the present application further provides a processor-readable storage medium storing a computer program, where the computer program is used to cause a processor to perform the steps of any of the above-mentioned methods for relocating edge application server.

In the methods and apparatuses for relocating edge application server, network functions and the storage medium provided in the embodiments of the present application, by receiving the first indication information, the first SMF may know that the source EAS needs to be relocated to the target EAS in the second PLMN, and then the first SMF may transmit the second indication information to the second SMF in the second PLMN. The second SMF may determine the second UPF based on the second indication information. The first SMF configures the first routing rule to the first UPF in the first PLMN after receiving the acknowledgement information transmitted from the second SMF. The data transmitted from the user equipment with the source EAS address or the target EAS address as the target address may be forwarded to the second UPF. The uplink data may be routed to the target EAS through the second UPF, which may achieve the relocation of the source EAS to the target EAS in the second PLMN, and ensure the service continuity.

### BRIEF DESCRIPTION OF THE DRAWINGS

To illustrate the solutions in the embodiments of the present application more clearly, the drawings used in the description of the embodiments are briefly described below. The drawings in the following description are only some embodiments of the present application, and other drawings may be obtained based on these drawings without any creative effort for those skilled in the art.
FIG. 1 is a first schematic flowchart of a method for relocating edge application server according to an embodiment of the present application;
FIG. 2 is a second schematic flowchart of a method for relocating edge application server according to an embodiment of the present application;
FIG. 3 is a third schematic flowchart of a method for relocating edge application server according to an embodiment of the present application;
FIG. 4 is a fourth schematic flowchart of a method for relocating edge application server according to an embodiment of the present application;
FIG. 5 is a schematic diagram of an application scenario of a method for relocating edge application server according to an embodiment of the present application;
FIG. 6 is a fifth schematic flowchart of a method for relocating edge application server according to an embodiment of the present application;
FIG. 7 is a sixth schematic flowchart of a method for relocating edge application server according to an embodiment of the present application;
FIG. 8 is a seventh schematic flowchart of a method for relocating edge application server according to an embodiment of the present application;
FIG. 9 is an eighth schematic flowchart of a method for relocating edge application server according to an embodiment of the present application;
FIG. 10 is a schematic structural diagram of a first session management function (SMF) according to an embodiment of the present application;
FIG. 11 is a schematic structural diagram of a second session management function (SMF) according to an embodiment of the present application;
FIG. 12 is a schematic structural diagram of an application function (AF) according to an embodiment of the present application;
FIG. 13 is a schematic structural diagram of a policy control function (PCF) according to an embodiment of the present application;
FIG. 14 is a first schematic structural diagram of an apparatus for relocating edge application server according to an embodiment of the present application;
FIG. 15 is a second schematic structural diagram of an apparatus for relocating edge application server according to an embodiment of the present application;
FIG. 16 is a third schematic structural diagram of an apparatus for relocating edge application server according to an embodiment of the present application; and
FIG. 17 is a fourth schematic structural diagram of an apparatus for relocating edge application server according to an embodiment of the present application.

### DETAILED DESCRIPTION

To better describe the solutions in the embodiments of the present application, relevant knowledge is introduced below.

Mobile edge computing (MEC) technology relocates computing storage capacity and service processing capacity to the edge of a network, so as not to transmit data back to the cloud as much as possible, reducing the waiting time and network costs for data to and from the cloud. Fifth generation mobile communication technology (5G) user planes and 5G MEC nodes are built on the edge for cloud based on distributed cloud infrastructure of 5G. The 5G MEC node provides an MEC application platform to enable the deployment and management of a third-party application. A user may obtain a service through an MEC application.

5G defines an application function (AF), which may transmit an AF request to a network exposure function (NEF) in a non-credit domain or a policy control function (PCF) in a credit domain. The AF request includes parameters such as a target data network name (DNN), an application identifier (ID), an N6 routing requirement, and an application location, etc. PCF may generate a policy and charging control (PCC) rule to a target protocol data unit (PDU) session service flow based on the information parameters provided by the AF, combined with its own policy control, and select a suitable user plane function (UPF) for it through a session management function (SMF). MEC provides functions such as application infrastructure resource orchestration, application instantiation, and application rule configuration, etc. Therefore, when MEC is deployed in a 5G system, MEC may also act as an application function, and interact with the 5G system control plan representing the applications deployed on MEC.

The networking for 5G international roaming may include two solutions: the first solution is the roaming area route/local breakout solution, and the second solution is the home-routed solution. The network architecture combined with edge computing in the local breakout (LBO) roaming scenario of the 5G system may include two types of network architectures: the first network architecture is a network architecture that accesses an edge computing server through an uplink classifier (UL CL)/branching point (BP), and the second network architecture is a network architecture for accessing the edge computing server without UL CL/BP participation.

To support selective data routing to a data network (DN), the SMF may control a data path of the PDU session to ensure that the PDU session may simultaneously correspond to multiple N6 interfaces (interfaces between UPF and DN). Each anchor supporting the PDU session provides different access paths to the same DN to achieve local shunting, using a UL CL function and an Internet Protocol version 6 (IPv6) multi-homing function BP. This architecture is referred to as a session breakout connection model.

Mobile communication systems may allow an operator platform (OP) to deploy an edge application provided by an application provider on another OP (with a federation agreement between different OPs) by introducing the federation of operator platforms. An OP is allowed to deploy an edge application on other OPs, and a subscriber may obtain application services from other OPs through the OP it homes in. The OPs may belong to the same public land mobile network (PLMN) or different PLMNs.

In the related art, for the edge application server (EAS) relocation, only the relocation between EASs deployed in different edge host environments (EHEs) within the same PLMN is considered. When an AF triggers relocation internally, the AF may transmit an EAS relocation indication or a target data network access identifier (DNAI) and other information to NEF/PCF, triggering user plane reconfiguration of the session through a flow influence mechanism.

In the related art, it is required that all functional entities (AF, SMF, and UPF, etc.) of a 5G core network (5GC) belong to the same PLMN, namely a home PLMN (HPLMN) in a non-roaming scenario or a visited PLMN (VPLMN) in an LBO mode. Inter-PLMN relocation cannot be supported. In the related art, the target DNAI is used to indicate the selection of the UPF, while DNAI is information maintained by the network, making it difficult for edge service providers to obtain the latest DNAI. It may be seen that in the related art, it is difficult to support inter-PLMN EAS relocation and ensure the service continuity.

To overcome the above-mentioned shortcomings, the present application provides methods and apparatuses for relocating edge application server, network functions and a storage medium. A first SMF transmits second indication information to a second SMF in a second PLMN and configures a first routing rule to a first UPF in a first PLMN, which may achieve the relocation of a source EAS to a target EAS in the second PLMN, and ensure the service continuity.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative effort belong to the scope of the present application.

The solutions provided in embodiments of the present application may be applied in various systems, especially a 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

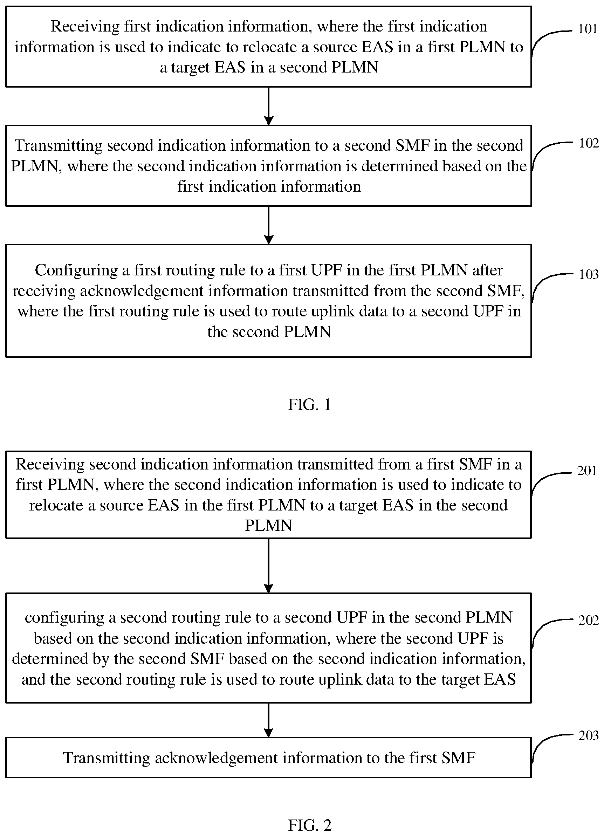

FIG. 1 is a first schematic flowchart of a method for relocating edge application server according to an embodiment of the present application. As shown in FIG. 1, an embodiment of the present application provides a method for relocating edge application server, which may be performed by a first SMF in a first PLMN. The method includes the following steps.

Step 101: receiving first indication information, where the first indication information is used to indicate to relocate a source EAS in a first PLMN to a target EAS in a second PLMN.

In an embodiment, to relocate the source EAS to the target EAS in the second PLMN, the first SMF in the first PLMN may receive the first indication information, and the first SMF may determine that the source EAS needs to be relocated to the target EAS in the second PLMN based on the received first indication information.

In an embodiment, the first SMF is a network function in the first PLMN.

In an embodiment, the first SMF may receive the first indication information from one or more functional entities.

Step 102: transmitting second indication information to a second SMF in the second PLMN, where the second indication information is determined based on the first indication information.

In an embodiment, after receiving the first indication information, to enable the second SMF to determine the second UPF in the second PLMN and configure a routing rule to the second UPF, the first SMF may transmit the second indication information to the second SMF in the second PLMN.

In an embodiment, the first SMF may select the second SMF through one or more modes, and after determining the second SMF, the first SMF may transmit the second indication information to the second SMF.

Step 103: configuring a first routing rule to a first UPF in the first PLMN after receiving acknowledgement information transmitted from the second SMF, where the first routing rule is used to route uplink (UL) data to a second UPF in the second PLMN.

In an embodiment, after transmitting the second indication information to the second SMF, to configure a routing rule to the first UPF in the first PLMN, the first SMF may wait for the acknowledgement information transmitted from the second SMF. After receiving the acknowledgement information, it may be determined that the second SMF has determined the second UPF and configured the routing rule to the second UPF. Then, the first SMF may configure the first routing rule to the first UPF, which may be used to route uplink data to the second UPF in the second PLMN. The routing rule corresponding to the second UPF may be used to route uplink data to the target EAS, which may achieve the relocation of the source EAS to the target EAS in the second PLMN.

In an embodiment, the method for relocating edge application server provided in the embodiments of the present application may also be used for relocating edge applications.

In the method for relocating edge application server provided in the embodiments of the present application, by receiving the first indication information, the first SMF knows that the source EAS needs to be relocated to the target EAS in the second PLMN, and then the first SMF transmits the second indication information to the second SMF in the second PLMN. The second SMF determines the second UPF based on the second indication information, and then the first SMF configures the first routing rule to the first UPF in the first PLMN after receiving the acknowledgement information transmitted from the second SMF. The data transmitted from the user equipment with the source EAS address or the target EAS address as the target address may be forwarded to the second UPF. The uplink data may be routed to the target EAS through the second UPF, which may achieve the relocation of the source EAS to the target EAS in the second PLMN, and ensure the service continuity.

In an embodiment, transmitting the second indication information to the second SMF in the second PLMN includes:
determining the second indication information based on the first indication information, where the second indication information is used to indicate to relocate the source EAS to the target EAS; and
transmitting the second indication information to the second SMF.

In an embodiment, after receiving the first indication information, to enable the second SMF to determine the second UPF in the second PLMN and configure a routing rule to the second UPF, the first SMF may determine the second indication information based on the first indication information, and then transmit the second indication information to the second SMF in the second PLMN. The second indication information may be the same as the first indication information, or different from the first indication information. The second indication information may be used to indicate to relocate the source EAS to the target EAS in the second PLMN.

In an embodiment, the first SMF may determine the second indication information and transmit the second indication information to the second SMF, and the second SMF may determine the second UPF based on the second indication information. After receiving the acknowledgement information transmitted from the second SMF, the first routing rule may be configured to the first UPF in the first PLMN, and the uplink data may be forwarded to the second UPF. The uplink data may be routed to the target EAS through the second UPF, which may achieve the relocation of the source EAS to the target EAS in the second PLMN and ensure the service continuity.

In an embodiment, the first UPF is a UPF that supports UL CL/BP or a UPF that supports PSA.

In an embodiment, after transmitting the second indication information to the second SMF, to configure a routing rule to the first UPF in the first PLMN, the first SMF may wait for the acknowledgement information transmitted from the second SMF. After receiving the acknowledgement information, it may be determined that the second SMF has determined the second UPF and configured the routing rule to the second UPF. Then, the first SMF may configure the first routing rule to the first UPF, where the first UPF may be a UPF that supports UL CL/BP, or a UPF that supports PSA.

In an embodiment, the first SMF may configure the first routing rule to the first UPF in the first PLMN, and then data transmitted from the user equipment with the source EAS address or the target EAS address as the target address may be forwarded to the second UPF. The uplink data may be routed to the target EAS through the second UPF, which may achieve the relocation of the source EAS to the target EAS in the second PLMN and ensure the service continuity.

In an embodiment, configuring the first routing rule to the first UPF in the first PLMN includes:
configuring the first routing rule to the first UPF based on the acknowledgement information transmitted from the second SMF, where the first UPF supports PSA or UL CL/BP.

In an embodiment, configuring the first routing rule to the first UPF in the first PLMN includes:
in case that the first UPF is a UPF that supports UL CL/BP, configuring the first routing rule to the UPF that supports UL CL/BP based on the acknowledgement information transmitted from the second SMF; or
in case that the first UPF is a UPF that supports PSA, configuring the first routing rule to the UPF that supports PSA based on the acknowledgement information transmitted from the second SMF.

In an embodiment, after transmitting the second indication information to the second SMF, to configure a routing rule to the first UPF in the first PLMN, the first SMF may wait for receiving the acknowledgement information transmitted from the second SMF. After receiving the acknowledgement information, it may be determined that the second SMF has determined the second UPF and configured a routing rule to the second UPF. Then, in case that the first UPF is a UPF that supports UL CL/BP, the first SMF may configure the first routing rule to the UPF that supports UL CL/BP, or in case that the first UPF is a UPF that supports PSA, the first SMF may configure the first routing rule to the UPF that supports PSA.

In an embodiment, the first SMF may configure the first routing rule to the UPF that supports UL CL/BP, then data transmitted from the user equipment with the source EAS address or the target EAS address as the target address may be forwarded to the second UPF. The uplink data may be routed to the target EAS through the second UPF, which may achieve the relocation of the source EAS to the target EAS in the second PLMN and ensure the service continuity.

In an embodiment, before configuring the first routing rule to the UPF that supports UL CL/BP based on the acknowledgement information transmitted from the second SMF, the method further includes:
inserting or reselecting a UPF that supports UL CL/BP.

In an embodiment, in case that the first UPF is a UPF that supports UL CL/BP, to configure a routing rule to the UPF that supports UL CL/BP, the first SMF may insert or reselect the UPF that supports UL CL/BP before configuring the first routing rule to the UPF that supports UL CL/BP. After receiving the acknowledgement information, it may be determined that the second SMF has determined the second UPF and configured the routing rule to the second UPF, and then the first SMF may configure the first routing rule to the UPF that supports UL CL/BP.

In an embodiment, the first SMF may insert or reselect a UPF that supports UL CL/BP, and configure the first routing rule to the UPF that supports UL CL/BP. The data transmitted from the user equipment with the source EAS address or the target EAS address as the target address may be forwarded to the second UPF. The uplink data may be routed to the target EAS through the second UPF, which may achieve the relocation of the source EAS to the target EAS in the second PLMN and ensure the service continuity.

In an embodiment, the acknowledgement information transmitted from the second SMF includes tunnel information corresponding to the second UPF, and configuring the first routing rule to the first UPF in the first PLMN includes:
configuring the first routing rule to the first UPF based on the tunnel information corresponding to the second UPF.

In an embodiment, after transmitting the second indication information to the second SMF, to configure a routing rule to the first UPF in the first PLMN, the first SMF may wait for receiving the acknowledgement information transmitted from the second SMF. After receiving the acknowledgement information, it may be determined that the second SMF has determined the second UPF and configured the routing rule to the second UPF.

In an embodiment, in case that the acknowledgement information transmitted from the second SMF includes the tunnel information corresponding to the second UPF, the first SMF may configure the first routing rule to the first UPF based on the tunnel information corresponding to the second UPF. The first routing rule may be used to route uplink data to the second UPF in the second PLMN, and the routing rule corresponding to the second UPF may be used to route uplink data to the target EAS, which may achieve the relocation of the source EAS to the target EAS in the second PLMN.

In an embodiment, after receiving the acknowledgement information transmitted from the second SMF, the first SMF may configure the first routing rule to the first UPF in the first PLMN based on the tunnel information corresponding to the second UPF. The data transmitted from the user equipment with the source EAS address or the target EAS address as the target address may be forwarded to the second UPF. The uplink data may be routed to the target EAS through the second UPF, which may achieve the relocation of the source EAS to the target EAS in the second PLMN and ensure the service continuity.

In an embodiment, the first indication information includes one or more types of the following information:
first information: an inter-PLMN relocation indication and/or an identifier (ID) of the second PLMN; or
second information: EAS Internet Protocol (IP) replacement information or information of the target EAS.

In an embodiment, to relocate the source EAS to the target EAS in the second PLMN, the first SMF in the first PLMN may receive the first indication information, which may include one or more types of information, and the first SMF may determine that the source EAS needs to be relocated to the target EAS in the second PLMN based on the received first indication information

In an embodiment, the first SMF may receive the first indication information, which may include the first information. The first SMF may determine that the source EAS needs to be relocated to the target EAS in the second PLMN based on the received first indication information.

In an embodiment, the first SMF may receive the first indication information, which may include the second information. The first SMF may determine that the source EAS needs to be relocated to the target EAS in the second PLMN based on the received first indication information.

In an embodiment, the first SMF may receive the first indication information, which may include the first information and the second information. The first SMF may determine that the source EAS needs to be relocated to the target EAS in the second PLMN based on the first information and the second information.

In an embodiment, in case that the first indication information includes the first information, the first information may be an inter-PLMN relocation indication, which is used to indicate to relocate the source EAS to EAS in other PLMNs.

In an embodiment, in case that the first indication information includes the first information, the first information may be the ID of the second PLMN, which is used to indicate to relocate the source EAS to the EAS of a corresponding PLMN of this ID.

In an embodiment, in case that the first indication information includes the second information, the second information may be EAS IP replacement information, which may include the IP address, port number, etc. of the target EAS.

In an embodiment, in case that the first indication information includes the second information, the second information may be information of the target EAS, which may include the IP address of the target EAS.

In an embodiment, after receiving the first indication information, the second SMF may determine the second indication information based on the first indication information. For example, in case that the first indication information includes the first information, it may be determined that the second indication information includes an inter-PLMN relocation indication. For example, in case that the first indication information includes the second information, it may be determined that the second indication information includes EAS IP replacement information or information of the target EAS.

In an embodiment, the first indication information may include one or more types of information. The first SMF may determine that the source EAS needs to be relocated to the target EAS in the second PLMN based on the received first indication information. The first SMF may transmit the second indication information to the second SMF in the second PLMN, then the second SMF may determine the second UPF based on the second indication information. After receiving the acknowledgement information transmitted from the second SMF, the first routing rule may be configured to the first UPF in the first PLMN, and the uplink data may be forwarded to the second UPF. The uplink data may be routed to the target EAS through the second UPF, which may achieve the relocation of the source EAS to the target EAS in the second PLMN and ensure the service continuity.

In an embodiment, receiving the first indication information includes:
receiving a policy and charging control (PCC) rule carrying the first indication information, where the PCC rule is generated by a policy control function (PCF) of the first PLMN.

In an embodiment, to relocate the source EAS to the target EAS in the second PLMN, the first SMF in the first PLMN may receive the PCC rule carrying the first indication information. The first indication information may be obtained based on the PCC rule. The first SMF may determine that the source EAS needs to be relocated to the target EAS in the second PLMN based on the first indication information.

In an embodiment, the first indication information received through the PCF may include one or more types of the following information:
first information: an inter-PLMN relocation indication and/or an identifier (ID) of the second PLMN; or
second information: EAS Internet Protocol (IP) replacement information or information of the target EAS.

In an embodiment, the first SMF may determine that the source EAS needs to be relocated to the target EAS in the second PLMN based on the received PCC rule carrying the first indication information, and then the first SMF may transmit the second indication information to the second SMF in the second PLMN. The second SMF may determine the second UPF based on the second indication information. After receiving the acknowledgement information transmitted from the second SMF, the first routing rule may be configured to the first UPF in the first PLMN, and the uplink data may be forwarded to the second UPF. The uplink data may be routed to the target EAS through the second UPF, which may achieve the relocation of the source EAS to the target EAS in the second PLMN and ensure the service continuity.

In an embodiment, in case that the first indication information includes the second information, receiving the first indication information includes:
receiving the second information transmitted from an application function (AF) of the first PLMN.

In an embodiment, to relocate the source EAS to the target EAS in the second PLMN, the first SMF in the first PLMN may receive the second information transmitted from the AF in the first PLMN. The first SMF may determine that the source EAS needs to be relocated to the target EAS in the second PLMN based on the first indication information.

In an embodiment, the second information may be obtained through the AF in the first PLMN. The first SMF may determine that the source EAS needs to be relocated to the target EAS in the second PLMN based on the received first indication information, and then the first SMF may transmit the second indication information to the second SMF in the second PLMN. The second SMF may determine the second UPF based on the second indication information. After receiving the acknowledgement information transmitted from the second SMF, the first routing rule may be configured to the first UPF in the first PLMN, and the uplink data may be forwarded to the second UPF. The uplink data may be routed to the target EAS through the second UPF, which may achieve the relocation of the source EAS to the target EAS in the second PLMN and ensure the service continuity.

In an embodiment, in case that the first indication information includes the second information, before transmitting the second indication information to the second SMF in the second PLMN, the method further includes:
determining a target data network access identifier (DNAI) based on the second information and Deployment information of EAS in the second PLMN;
transmitting a first request message carrying the target DNAI to a first access and mobility management function (AMF) in the first PLMN, where the first request message is used to request the first AMF to select the SMF in the second PLMN; and
determining the second SMF after receiving information of selected SMF transmitted from the first AMF.

In an embodiment, to select the second SMF in the second PLMN, before transmitting the second indication information to the second SMF in the second PLMN, in case that the first indication information includes the second information, the first SMF may determine the target DNAI based on the second information and the Deployment information of EAS in the second PLMN, and transmit the first request message carrying the target DNAI to the first AMF in the first PLMN. After receiving the information of selected SMF transmitted from the first AMF, the second SMF may be determined, where the first AMF may be an AMF in the first PLMN.

In an embodiment, the way to transmit the first request message to the first AMF in the first PLMN may be calling *Nsmf_PDUSession_SMContextStatusNotify.*

In an embodiment, the first SMF may select the second SMF and transmit the second indication information to the second SMF, then the second SMF may determine the second UPF based on the second indication information. After receiving the acknowledgement information transmitted from the second SMF, the first routing rule may be configured to the first UPF in the first PLMN, and the uplink data may be forwarded to the second UPF. The uplink data may be routed to the target EAS through the second UPF, which may achieve the relocation of the source EAS to the target EAS in the second PLMN and ensure the service continuity.

In an embodiment, before determining the target DNAI based on the second information and the Deployment information of EAS in the second PLMN, the method further includes:
obtaining the Deployment information of EAS in the second PLMN based on local configuration of the first SMF; or
obtaining the Deployment information of EAS in the second PLMN by subscribing to the NEF in the first PLMN.

In an embodiment, to obtain the Deployment information of EAS in the second PLMN, the first SMF may obtain the Deployment information of EAS in the second PLMN based on its local configuration before determining the target DNAI.

In an embodiment, to obtain the Deployment information of EAS in the second PLMN, before determining the target DNAI, the first SMF obtains the Deployment information of EAS in the second PLMN by subscribing to the NEF in the first PLMN.

In an embodiment, the first SMF may select the second SMF and transmit the second indication information to the second SMF, then the second SMF may determine the second UPF based on the second indication information. After receiving the acknowledgement information transmitted from the second SMF, the first routing rule may be configured to the first UPF in the first PLMN, and the uplink data may be forwarded to the second UPF. The uplink data may be routed to the target EAS through the second UPF, which may achieve the relocation of the source EAS to the target EAS in the second PLMN and ensure the service continuity.

In an embodiment, before transmitting the second indication information to the second SMF in the second PLMN, the method further includes:
transmitting a second request message to a first network repository function (NRF) in the first PLMN, where the second request message is used to request the first NRF to query the SMF in the second PLMN; and
determining the second SMF after receiving the queried information transmitted from the first NRF.

In an embodiment, to select the second SMF in the second PLMN, before transmitting the second indication information to the second SMF in the second PLMN, the first SMF may transmit a second request message to the first NRF in the first PLMN, and request the first NRF to query the SMF in the second PLMN. After receiving the queried information transmitted from the first NRF, the second SMF may be determined.

In an embodiment, the first SMF may select the second SMF and transmit the second indication information to the second SMF, then the second SMF may determine the second UPF based on the second indication information. After receiving the acknowledgement information transmitted from the second SMF, the first routing rule may be configured to the first UPF in the first PLMN, and the uplink data may be forwarded to the second UPF. The uplink data may be routed to the target EAS through the second UPF, which may achieve the relocation of the source EAS to the target EAS in the second PLMN and ensure the service continuity.

In an embodiment, the second PLMN may be a visited PLMN or a home PLMN.

In an embodiment, to relocate the source EAS to the target EAS in the second PLMN, the first SMF in the first PLMN may receive the first indication information. The first SMF may determine that the source EAS needs to be relocated to the target EAS in the second PLMN based on the received first indication information. In case that the second PLMN is the visited PLMN, the first PLMN may be the home PLMN, and in case that the second PLMN is the home PLMN, the first PLMN may be the visited PLMN.

In an embodiment, by receiving the first indication information, the first SMF may know that the source EAS needs to be relocated to the target EAS in the second PLMN, where the second PLMN may be a visited PLMN or a home PLMN. The first SMF may transmit the second indication information to the second SMF, then the second SMF may determine the second UPF based on the second indication information. After receiving the acknowledgement information transmitted from the second SMF, the first routing rule may be configured to the first UPF in the first PLMN, and the uplink data may be forwarded to the second UPF. The uplink data may be routed to the target EAS through the second UPF, which may achieve the relocation of the source EAS to the target EAS in the second PLMN and ensure the service continuity.

In an embodiment, before transmitting the second indication information to the second SMF in the second PLMN, the method further includes:
in case that the second PLMN is a visited PLMN, transmitting a third request message to a unified data management (UDM) in the first PLMN, where the third request message is used to request acknowledgement whether a user equipment (UE) is authorized to access the second PLMN; and
determining that the UE is authorized to access the second PLMN after receiving acknowledgement information replied from the UDM in the first PLMN.

In an embodiment, before transmitting the second indication information to the second SMF in the second PLMN, in case that the second PLMN is a visited PLMN, the first SMF may transmit the third request message to the UDM in the first PLMN. After receiving the acknowledgement information from the UDM in the first PLMN, the first SMF may determine that the UE is authorized to access the second PLMN, and then the second indication information may be transmitted to the second SMF in the second PLMN.

In an embodiment, in case that the second PLMN is a visited PLMN, it may be determined whether the UE is authorized to access the second PLMN. In case that it is determined that the UE is authorized to access the second PLMN, the second indication information may be transmitted to the second SMF, then the second SMF may determine the second UPF based on the second indication information. After receiving the acknowledgement information transmitted from the second SMF, the first routing rule may be configured to the first UPF, and the uplink data transmitted from the user equipment may be forwarded to the second UPF. The uplink data may be routed to the target EAS through the second UPF, which may achieve the relocation of the source EAS to the target EAS in the second PLMN and ensure the service continuity.

In an embodiment, the second PLMN may be any of one or more third PLMNs, and the third PLMN is not the same as the first PLMN and includes one or more candidate EASs.

In an embodiment, the third PLMN may be a PLMN that includes one or more candidate EASs, and the third PLMN is not the same as the first PLMN. The second PLMN may be any of one or more third PLMNs, and the first indication information may be used to indicate to relocate the source EAS to the target EAS in the second PLMN. By receiving this first indication information, the first SMF may know the need to relocate the source EAS to the target EAS in the second PLMN.

In the method for relocating edge application server provided in the embodiments of the present application, by receiving the first indication information, the first SMF may know that the source EAS needs to be relocated to the target EAS in the second PLMN, and then the first SMF may transmit the second indication information to the second SMF in the second PLMN. The second SMF may determine the second UPF based on the second indication information, and the first SMF may configure the first routing rule to the first UPF in the first PLMN after receiving the acknowledgement information transmitted from the second SMF. The data transmitted from the user equipment with the source EAS address or the target EAS address as the target address may be forwarded to the second UPF. The uplink data may be routed to the target EAS through the second UPF, which may achieve the relocation of the source EAS to the target EAS in the second PLMN, and ensure the service continuity.

FIG. 2 is a second schematic flowchart of a method for relocating edge application server according to an embodiment of the present application. As shown in FIG. 2, an embodiment of the present application provides a method for relocating edge application server, which may be performed by the second SMF in the second PLMN. The method includes the following steps.

Step 201: receiving second indication information transmitted from a first SMF in a first PLMN, where the second indication information is used to indicate to relocate a source EAS in the first PLMN to a target EAS in the second PLMN.

In an embodiment, to relocate the source EAS to the target EAS in the second PLMN, the second SMF in the second PLMN may receive the second indication information transmitted from the first SMF in the first PLMN. The second SMF may determine that the source EAS needs to be relocated to the target EAS in the second PLMN based on the received second indication information.

In an embodiment, the second SMF is a network function in the second PLMN.

Step 202: configuring a second routing rule to a second UPF in the second PLMN based on the second indication information, where the second UPF is determined by the second SMF based on the second indication information, and the second routing rule is used to route uplink (UL) data to the target EAS.

In an embodiment, after receiving the second indication information transmitted from the first SMF, to route the uplink data to the target EAS, the second SMF may configure the second routing rule to the second UPF in the second PLMN, and the second UPF may route the received uplink data to the target EAS.

Step 203: transmitting acknowledgement information to the first SMF.

In an embodiment, after configuring the second routing rule to the second UPF, to enable the first SMF to configure the routing rule to the first UPF in the first PLMN, the second SMF may transmit the acknowledgement information to the first SMF.

In an embodiment, after transmitting the acknowledgement information to the first SMF, the first SMF may determine that the second SMF has determined the second UPF and configured the routing rule to the second UPF. Then, the first SMF may configure the first routing rule to the first UPF, which may be used to route uplink data to the second UPF in the second PLMN. The second UPF may route the uplink data to the target EAS, which may achieve the relocation of the source EAS to the target EAS in the second PLMN.

In the method for relocating edge application server provided in the embodiments of the present application, by receiving the second indication information, the second SMF may know that the source EAS needs to be relocated to the target EAS in the second PLMN, and then the second SMF may configure the second routing rule to the second UPF, and may transmit the acknowledgement information to the first SMF. The first SMF configures the first routing rule. The data transmitted from the user equipment with the source EAS address or the target EAS address as the target address may be forwarded to the second UPF, and the uplink data may be routed to the target EAS through the second UPF, which may achieve the relocation of the source EAS to the target EAS in the second PLMN and ensure the service continuity.

In an embodiment, the second indication information includes one or more types of the following information:
first information: an inter-PLMN relocation indication; or
second information: EAS Internet Protocol (IP) replacement information or information of the target EAS.

In an embodiment, to relocate the source EAS to the target EAS in the second PLMN, the second SMF in the second PLMN may receive the second indication information transmitted from the first SMF in the first PLMN, which may include one or more types of information. The second SMF may determine that the source EAS needs to be relocated to the target EAS in the second PLMN based on the received second indication information.

In an embodiment, the second SMF may receive the second indication information, which may include the first information. The second SMF may determine that the source EAS needs to be relocated to the target EAS in the second PLMN based on the received second indication information.

In an embodiment, the second SMF may receive the second indication information, which may include the second information. The second SMF may determine that the source EAS needs to be relocated to the target EAS in the second PLMN based on the received second indication information.

In an embodiment, the second SMF may receive the second indication information, which may include the first information and the second information. The second SMF may determine that the source EAS needs to be relocated to the target EAS in the second PLMN based on the first information and the second information.

In an embodiment, in case that the second indication information includes the first information, the first information may be an inter-PLMN relocation indication, which is used to indicate to relocate the source EAS to an EAS in other PLMNs.

In an embodiment, in case that the second indication information includes the second information, the second information may be EAS IP replacement information, which may include the IP address, port number, etc. of the target EAS.

In an embodiment, in case that the second indication information includes the second information, the second information may be information of the target EAS, which may include the IP address of the target EAS.

In an embodiment, the second indication information may include one or more types of information. By receiving the second indication information, the second SMF may know that the source EAS needs to be relocated to the target EAS in the second PLMN. The second SMF may then configure the second routing rule to the second UPF and transmit the acknowledgement information to the first SMF to configure the first routing rule by the first SMF. The uplink data transmitted from the user equipment may be forwarded to the second UPF, and the uplink data may be routed to the target EAS through the second UPF, which may achieve the relocation of the source EAS to the target EAS in the second PLMN and ensure the service continuity.

In an embodiment, in case that the second indication information includes the second information, before configuring the second routing rule to the second UPF in the second PLMN based on the second indication information, the method further includes:
inserting or reselecting the second UPF based on the second information.

In an embodiment, to configure a routing rule to the second UPF, in case that the second indication information includes the second information, the second SMF may insert or reselect the second UPF based on the second information, and then configure the second routing rule to the second UPF in the second PLMN based on the second indication information.

In an embodiment, in case that the second indication information includes the second information, the second SMF may insert or reselect the second UPF, and then configure the second routing rule to the second UPF, and may transmit the acknowledgement information to the first SMF to configure the first routing rule by the first SMF. The uplink data transmitted from the user equipment may be forwarded to the second UPF, and the uplink data may be routed to the target EAS through the second UPF, which may achieve the relocation of the source EAS to the target EAS in the second PLMN and ensure the service continuity.

In an embodiment, after receiving the second indication information transmitted from the first SMF in the first PLMN, the method further includes:
in case that the second indication information includes the second information and the second information is the EAS IP replacement information, configuring the EAS IP replacement information to the second UPF.

In an embodiment, after receiving the second indication information, in case that the second indication information includes the second information and the second information is the EAS IP replacement information, the second SMF may configure the EAS IP replacement information to the second UPF based on the second information.

In an embodiment, after receiving the second indication information transmitted from the first SMF in the first PLMN, the method further includes:
configuring a third routing rule to the second UPF in the second PLMN based on the second indication information, where the third routing rule is used to route downlink data to a first UPF in the first PLMN.

In an embodiment, after receiving the second indication information transmitted from the first SMF, to route the downlink data transmitted from the target EAS to the first UPF in the first PLMN, the second SMF may configure the third routing rule to the second UPF in the second PLMN, which may route the downlink data transmitted from the target EAS to the first UPF, and then the downlink data may be forwarded to the user equipment through the first UPF.

In an embodiment, the second SMF may configure the second routing rule and the third routing rule to the second UPF, then data transmitted from the user equipment with the source EAS address or the target EAS address as the target address may be forwarded to the second UPF. The uplink data may be routed to the target EAS through the second UPF, and downlink data may be routed to the first UPF through the second UPF and forwarded to the user equipment, which may achieve the relocation of the source EAS to the target EAS in the second PLMN and ensure the service continuity.

In an embodiment, the acknowledgement information includes tunnel information corresponding to the second UPF.

In an embodiment, to enable the first SMF to perform routing configuration based on the acknowledgement information, after configuring the second routing rule to the second UPF, the second SMF may transmit the acknowledgement information to the first SMF and carry the tunnel information corresponding to the second UPF in the acknowledgement information. The first SMF may configure the first routing rule to the first UPF based on the tunnel information corresponding to the second UPF.

In an embodiment, the second SMF may transmit the acknowledgement information to the first SMF, which includes the tunnel information corresponding to the second UPF. Then the first SMF may configure the first routing rule. The uplink data transmitted from the user equipment may be forwarded to the second UPF, and the uplink data may be routed to the target EAS through the second UPF, which may achieve the relocation of the source EAS to the target EAS in the second PLMN and ensure the service continuity.

In the method for relocating edge application server provided in the embodiments of the present application, by receiving the second indication information, the second SMF may know that the source EAS needs to be relocated to the target EAS in the second PLMN, and then the second SMF may configure the second routing rule to the second UPF, and may transmit acknowledgement information to the first SMF. The first SMF configures the first routing rule. The data transmitted from the user equipment with the source EAS address or the target EAS address as the target address may be forwarded to the second UPF, and the uplink data may be routed to the target EAS through the second UPF, which may achieve the relocation of the source EAS to the target EAS in the second PLMN and ensure the service continuity.

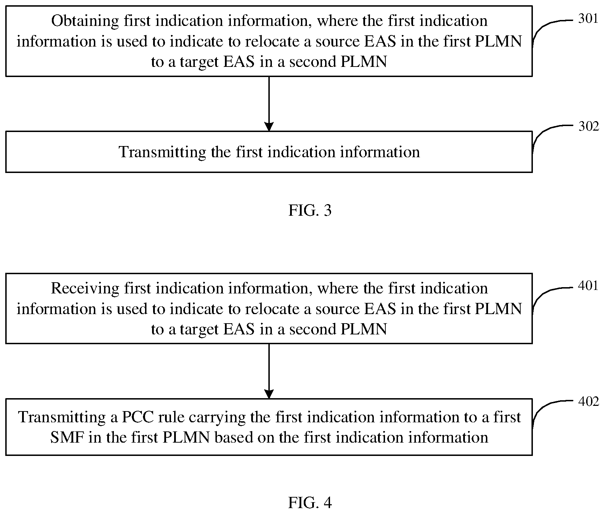

FIG. 3 is a third schematic flowchart of a method for relocating edge application server according to an embodiment of the present application. As shown in FIG. 3, an embodiment of the present application provides a method for relocating edge application server, performed by an AF in a first PLMN. The method includes the following steps.

Step 301: obtaining first indication information, where the first indication information is used to indicate to relocate a source EAS in the first PLMN to a target EAS in a second PLMN.

In an embodiment, to relocate the source EAS to the target EAS in the second PLMN, the AF in the first PLMN may obtain the first indication information, which may be used to indicate to relocate the source EAS to the target EAS in the second PLMN. This may enable the functional entity receiving the first indication information to determine that the source EAS needs to be relocated to the target EAS in the second PLMN.

In an embodiment, the above AF may be a network function in the first PLMN.

In an embodiment, when EAS relocation occurs (e.g., triggered internally in the AF due to load, maintenance, etc. of the source EAS), the AF may determine that the source EAS is unavailable and needs to be relocated to EAS deployed in other PLMNs. The AF may determine the target EAS based on information such as UE subscription, federated OP protocol (e.g., federation agreement between different OPs), and whether candidate EAS is currently available (e.g., obtaining information through application layer interaction), and then obtain the first indication information.

Step 302: transmitting the first indication information.

In an embodiment, after obtaining the first indication information, to make the first SMF in the first PLMN aware of the need to relocate the source EAS to the target EAS in the second PLMN, the AF may transmit the first indication information.

In an embodiment, after obtaining the first indication information, the AF in the first PLMN may transmit the first indication information to the first SMF through one or more functional entities.

In an embodiment, after the AF in the first PLMN transmits the first indication information, the first SMF may receive the first indication information, and then the first SMF may determine that the source EAS needs to be relocated to the target EAS in the second PLMN. The first SMF may then perform routing configuration, and the data transmitted from the user equipment with the source EAS address or the target EAS address as the target address may be forwarded to the second UPF in the second PLMN. The uplink data may be routed to the target EAS through the second UPF.

In the method for relocating edge application server provided in the embodiments of the present application, the AF obtains the first indication information and transmits the first indication information, the first SMF may be enabled to determine the need to relocate the source EAS to the target EAS in the second PLMN and perform routing configuration. The uplink data may be forwarded to the second UPF in the second PLMN. The uplink data may be routed to the target EAS through the second UPF, which may achieve the relocation of the source EAS to the target EAS in the second PLMN and ensure the service continuity.

In an embodiment, the first indication information includes one or more types of the following information:
first information: an inter-PLMN relocation indication and/or an identifier (ID) of the second PLMN; or
second information: EAS Internet Protocol (IP) replacement information or information of the target EAS.

In an embodiment, to relocate the source EAS to the target EAS in the second PLMN, the AF in the first PLMN may obtain the first indication information, which may include one or more types of information. The first indication information may be used to indicate to relocate the source EAS to the target EAS in the second PLMN. This may enable the functional entity receiving the first indication information to determine that the source EAS needs to be relocated to the target EAS in the second PLMN.

In an embodiment, the AF in the first PLMN may obtain the first indication information, which may include the first information. To make the first SMF in the first PLMN aware of the need to relocate the source EAS to the target EAS in the second PLMN, the AF may transmit the first indication information.

In an embodiment, the AF in the first PLMN may obtain the first indication information, which may include the second information. To make the first SMF in the first PLMN aware of the need to relocate the source EAS to the target EAS in the second PLMN, the AF may transmit the first indication information.

In an embodiment, the AF in the first PLMN may obtain the first indication information, which may include both the first information and the second information. To make the first SMF in the first PLMN aware of the need to relocate the source EAS to the target EAS in the second PLMN, the AF may transmit the first indication information.

In an embodiment, in case that the first indication information includes the first information, the first information may be an inter-PLMN relocation indication, which is used to indicate to relocate the source EAS to an EAS in other PLMNs.

In an embodiment, in case that the first indication information includes the first information, the first information may be the ID of the second PLMN, which is used to indicate to relocate the source EAS to the EAS in a corresponding PLMN of this ID.

In an embodiment, in case that the first indication information includes the second information, the second information may be EAS IP replacement information, which may include the IP address, port number, etc. of the target EAS.

In an embodiment, in case that the first indication information includes the second information, the second information may be information of the target EAS, which may include the IP address of the target EAS.

In an embodiment, the AF obtains the first indication information including one or more types of information and transmits the first indication information, the first SMF may be enabled to determine the need to relocate the source EAS to the target EAS in the second PLMN and perform routing configuration. The uplink data may be forwarded to the second UPF in the second PLMN. The uplink data may be routed to the target EAS through the second UPF, which may achieve the relocation of the source EAS to the target EAS in the second PLMN and ensure the service continuity.

In an embodiment, transmitting the first indication information includes:
transmitting the first indication information to a network exposure function (NEF) in the first PLMN or a policy control function (PCF) in the first PLMN.

In an embodiment, after obtaining the first indication information, to make the first SMF in the first PLMN aware of the need to relocate the source EAS to the target EAS in the second PLMN, the AF may transmit the first indication information to the NEF or PCF in the first PLMN.

In an embodiment, the AF obtains the first indication information and transmits the first indication information to the NEF or PCF, the first SMF may be enabled to determine the need to relocate the source EAS to the target EAS in the second PLMN and perform routing configuration. The uplink data may be forwarded to the second UPF in the second PLMN. The uplink data may be routed to the target EAS through the second UPF, which may achieve the relocation of the source EAS to the target EAS in the second PLMN and ensure the service continuity.

In an embodiment, transmitting the first indication information includes:
in case that the first indication information includes the second information, transmitting the second information to a SMF in the first PLMN.

In an embodiment, after obtaining the first indication information, for the first SMF in the first PLMN to receive the first indication information, in case that the first indication information includes the second information, the AF may transmit the second information to the first SMF in the first PLMN.

In an embodiment, the AF obtains the first indication information and transmits the first indication information, the first SMF may be enabled to determine the need to relocate the source EAS to the target EAS in the second PLMN and perform routing configuration. The uplink data may be forwarded to the second UPF in the second PLMN. The uplink data may be routed to the target EAS through the second UPF, which may achieve the relocation of the source EAS to the target EAS in the second PLMN and ensure the service continuity.

In an embodiment, transmitting the first indication information includes:
in case that the first indication information includes the second information, transmitting the second information to a user equipment (UE) through an application layer.

In an embodiment, after obtaining the first indication information, in case that the first indication information includes the second information, the second information may be transmitted to the UE through the application layer, which may make the UE aware of the need to relocate the source EAS to the target EAS in the second PLMN.

In an embodiment, the second information transmitted to the UE may include EAS IP replacement information or information of the target EAS.

In an embodiment, by transmitting the second information to the UE through the application layer, the UE may aware of the need to relocate the source EAS to the target EAS in the second PLMN.

In the method for relocating edge application server provided in the embodiments of the present application, the AF obtains the first indication information and transmits the first indication information, the first SMF may be enabled to determine the need to relocate the source EAS to the target EAS in the second PLMN and perform routing configuration. The uplink data may be forwarded to the second UPF in the second PLMN. The uplink data may be routed to the target EAS through the second UPF, which may achieve the relocation of the source EAS to the target EAS in the second PLMN and ensure the service continuity.

FIG. 4 is a fourth schematic flowchart of a method for relocating edge application server according to an embodiment of the present application. As shown in FIG. 4, an embodiment of the present application provides a method for relocating edge application server, which may be performed by a PCF in a first PLMN. The method includes the following steps.

Step 401: receiving first indication information, where the first indication information is used to indicate to relocate a source EAS in the first PLMN to a target EAS in a second PLMN.

In an embodiment, to relocate the source EAS to the target EAS in the second PLMN, the PCF in the first PLMN may receive the first indication information. The PCF in the first PLMN may determine that the source EAS needs to be relocated to the target EAS in the second PLMN based on the received first indication information.

In an embodiment, the above PCF may be a network function in the first PLMN.

In an embodiment, the PCF in the first PLMN may receive the first indication information through one or more functional entities.

Step 402: transmitting a PCC rule carrying the first indication information to a first SMF in the first PLMN based on the first indication information.

In an embodiment, after receiving the first indication information, to make the first SMF in the first PLMN aware of the need to relocate the source EAS to the target EAS in the second PLMN, the PCF in the first PLMN may carry the first indication information in the PCC rule and transmit the PCC rule to the first SMF.

In an embodiment, after the PCF in the first PLMN transmits the first indication information, the first SMF may receive the first indication information, and then the first SMF may determine that the source EAS needs to be relocated to the target EAS in the second PLMN. The first SMF may then perform the routing configuration, and the data transmitted from the user equipment with the source EAS address or the target EAS address as the target address may be forwarded to the second UPF in the second PLMN. The uplink data may be routed to the target EAS through the second UPF.

In the method for relocating edge application server provided in the embodiments of the present application, the PCF in the first PLMN receives the first indication information and carries the first indication information in the PCC rule to transmit to the first SMF, the first SMF may be enabled to determine the need to relocate the source EAS to the target EAS in the second PLMN and perform routing configuration. The uplink data may be forwarded to the second UPF in the second PLMN. The uplink data may be routed to the target EAS through the second UPF, which may achieve the relocation of the source EAS to the target EAS in the second PLMN and ensure the service continuity.

In an embodiment, receiving the first indication information includes:
receiving the first indication information transmitted from an application function (AF) in the first PLMN; or
receiving the first indication information transmitted from a network exposure function (NEF) in the first PLMN.

In an embodiment, to relocate the source EAS to the target EAS in the second PLMN, the PCF in the first PLMN may receive the first indication information transmitted from the AF or the first indication information transmitted from the NEF. The PCF in the first PLMN may determine that the source EAS needs to be relocated to the target EAS in the second PLMN based on the received first indication information.

In an embodiment, the PCF may receive the first indication information transmitted from the AF or NEF, and then carry the first indication information in the PCC rule to transmit to the first SMF. The first SMF may be enabled to determine the need to relocate the source EAS to the target EAS in the second PLMN and perform routing configuration. The uplink data may be forwarded to the second UPF in the second PLMN. The uplink data may be routed to the target EAS through the second UPF, which may achieve the relocation of the source EAS to the target EAS in the second PLMN and ensure the service continuity.

In an embodiment, before transmitting the PCC rule carrying the first indication information to the first SMF in the first PLMN, the method further includes:
in case that the second PLMN is a visited PLMN, determining that a user equipment (UE) is authorized to access the visited PLMN, where the second PLMN is a PLMN where the target EAS is located; and
generating the PCC rule carrying the first indication information based on the first indication information.

In an embodiment, after receiving the first indication information, in case that the second PLMN is a visited PLMN, and it is determined that the UE is authorized to access the visited PLMN, the PCC rule carrying the first indication information may be generated based on the first indication information, and then the PCC rule may be transmitted to the first SMF.

In an embodiment, in case that the second PLMN is a visited PLMN, in case that it is determined that the UE is authorized to access the visited PLMN, the PCC rule carrying the first indication information may be generated, and then the PCC rule may be transmitted to the first SMF. The first SMF may be enabled to determine the need to relocate the source EAS to the target EAS in the second PLMN and perform routing configuration. The uplink data may be forwarded to the second UPF in the second PLMN. The uplink data may be routed to the target EAS through the second UPF, which may achieve the relocation of the source EAS to the target EAS in the second PLMN and ensure the service continuity.

In an embodiment, the first indication information includes one or more types of the following information:
first information: an inter-PLMN relocation indication and/or an identifier (ID) of the second PLMN; or
second information: EAS Internet Protocol (IP) replacement information or information of the target EAS.

In an embodiment, to relocate the source EAS to the target EAS in the second PLMN, the PCF in the first PLMN may receive the first indication information, which may include one or more types of information. The PCF in the first PLMN may determine that the source EAS needs to be relocated to the target EAS in the second PLMN based on the received first indication information.

In an embodiment, the PCF in the first PLMN may receive the first indication information, which may include the first information. The PCF in the first PLMN may determine that the source EAS needs to be relocated to the target EAS in the second PLMN based on the received first indication information.

In an embodiment, the PCF in the first PLMN may receive the first indication information, which may include the second information. The PCF in the first PLMN may determine that the source EAS needs to be relocated to the target EAS in the second PLMN based on the received first indication information.

In an embodiment, the PCF in the first PLMN may receive the first indication information, which may include both the first information and the second information. The PCF in the first PLMN may determine that the source EAS needs to be relocated to the target EAS in the second PLMN based on the first information and the second information.

In an embodiment, in case that the first indication information includes the first information, the first information may be an inter-PLMN relocation indication, which is used to indicate to relocate the source EAS to an EAS in other PLMNs.

In an embodiment, in case that the first indication information includes the first information, the first information may be the ID of the second PLMN, which is used to indicate to relocate the source EAS to the EAS in a corresponding PLMN of this ID.

In an embodiment, in case that the first indication information includes the second information, the second information may be EAS IP replacement information, which may include the IP address, port number, etc. of the target EAS.

In an embodiment, in case that the first indication information includes the second information, the second information may be information of the target EAS, which may include the IP address of the target EAS.

In an embodiment, the PCF in the first PLMN may receive the first indication information including one or more types of information and carry the first indication information in the PCC rule to transmit to the first SMF. The first SMF may be enabled to determine the need to relocate the source EAS to the target EAS in the second PLMN and perform routing configuration. The uplink data may be forwarded to the second UPF in the second PLMN. The uplink data may be routed to the target EAS through the second UPF, which may achieve the relocation of the source EAS to the target EAS in the second PLMN and ensure the service continuity.

In the method for relocating edge application server provided in the embodiments of the present application, the PCF in the first PLMN receives the first indication information and carries the first indication information in the PCC rule to transmit to the first SMF, the first SMF may be enabled to determine the need to relocate the source EAS to the target EAS in the second PLMN and perform routing configuration. The uplink data may be forwarded to the second UPF in the second PLMN. The uplink data may be routed to the target EAS through the second UPF, which may achieve the relocation of the source EAS to the target EAS in the second PLMN and ensure the service continuity.

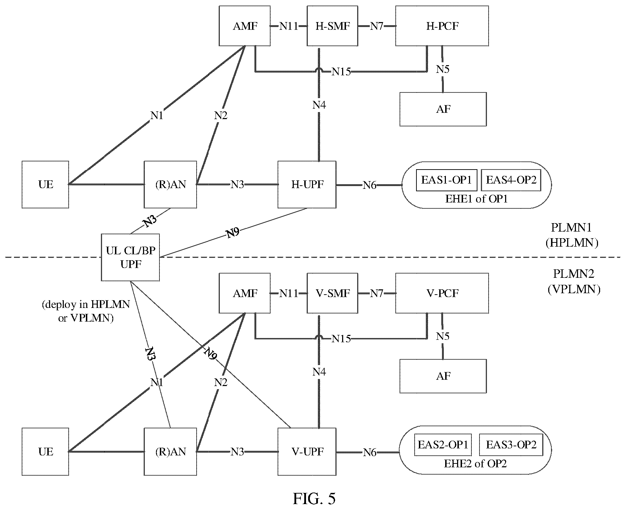

In an embodiment, FIG. 5 is a schematic diagram of an application scenario of a method for relocating edge application server according to an embodiment of the present application. The method for relocating edge application server provided in the embodiments of the present application may be used in the scenario shown in FIG. 5. As shown in FIG. 5, in PLMN1 (which may be an HPLMN), OP1 provides EHE1, EHE1 includes EAS1 deployed by OP1 and EAS4 deployed by OP2. In PLMN2 (which may be a VPLMN), OP2 provides EHE2, EHE2 includes EAS2 deployed by OP1 and EAS3 deployed by OP2. When the UE roams to PLMN2, the UE may obtain the services provided by OP1 through OP2.

As shown in FIG. 5, the HPLMN may include an access network (AN) entity/RAN entity, an AMF entity, a home SMF (H-SMF) entity, a home UPF (H-UPF) entity, a home PCF (H-PCF) entity, and an AF entity. The H-SMF in HPLMN may insert a UL CL/BP H-UPF, and the H-SMF in HPLMN may also not insert a UL CL/BP H-UPF.

As shown in FIG. 5, the VPLMN may include an AN entity/RAN entity, an AMF entity, a visited SMF (V-SMF) entity, a visited UPF (V-UPF) entity, a visited PCF (V-PCF) entity, and an AF entity, etc. The V-SMF in VPLMN may insert a UL CL/BP V-UPF, and the V-SMF in VPLMN may also not insert a UL CL/BP V-UPF.

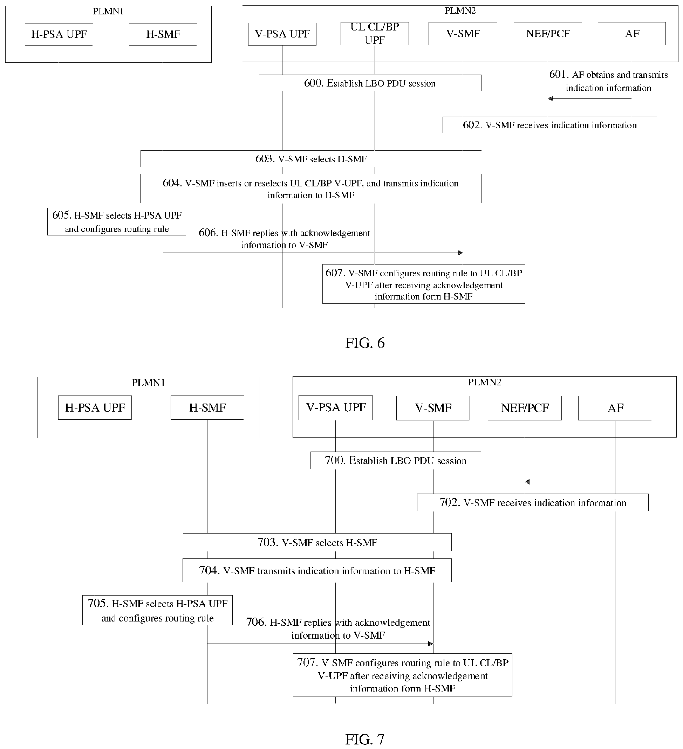

In an embodiment, FIG. 6 is a fifth schematic flowchart of a method for relocating edge application server according to an embodiment of the present application. The target EAS may be deployed in PLMN1 (HPLMN) in FIG. 5, and V-SMF may insert the UL CL/BP V-UPF and configuring a routing rule to forward data to the target EAS. As shown in FIG. 6, the method for relocating edge application server provided in the embodiments of the present application may include step 600 to step 607.

Step 600: an LBO PDU session is established.

In an embodiment, the UE is currently roaming to PLMN2 (VPLMN), and establishes an LBO PDU session to access EAS2 deployed by OP1 in PLMN2 to use edge services.

Step 601: an AF obtains the first indication information and transmits the first indication information.

In an embodiment, when EAS relocation occurs (e.g., triggered internally in AF due to EAS load, maintenance, etc.), the AF (i.e., AF (V-AF) in VPLMN) may determine that EAS2 is unavailable and needs to be relocated to EAS deployed in PLMN1 (e.g., EAS1 deployed by OP1). The AF may determine the target EAS based on information such as UE subscription, federated OP protocol (e.g., federation agreement between different OPs), and whether candidate EAS is currently available (e.g., information obtained through application layer interaction).

In an embodiment, the AF may transmit the first indication information to the NEF by calling *NnefTrafficInfluence_Create* or *Nnef_TrafficInfluence_Update* service operations, or may transmit the first indication information to the PCF by calling *Npcf_PolicyAuthoritation_Create* or *Npcf_PolicyAuthoritation_Update.* The transmitted first indication information may include one or more types of the following information:
first information: inter-PLMN relocation (used to indicate to relocate EAS to different PLMNs) and/or a PLMN ID (identifier of the PLMN where the target EAS is located); or
second information: EAS IP replacement information or information of the target EAS.

In an embodiment, in case that 5GC supports EAS IP replacement, the AF may transmit the EAS IP replacement information (such as target EAS IP address, port number, etc.) to the network.

In an embodiment, AF may transmit the information of the target EAS (such as the target EAS IP address) to the network, and transmit the information of the target EAS to the UE through the application layer.

Step 602: the V-SMF receives the first indication information.

In an embodiment, the V-PCF may receive the first indication information from the NEF or AF, and then generate a PCC rule including the first indication information. The V-PCF may transmit the first indication information to the V-SMF by calling *Npcf_SMPolicyControl_UpdateNotify,* where the first indication information may include the first information, which may include inter-PLMN relocation or the PLMN ID.

Step 603: the V-SMF selects the H-SMF.

In an embodiment, the procedure of V-SMF selecting an H-SMF may be a procedure of V-SMF discovering an H-SMF.

In an embodiment, the V-SMF may discover an H-SMF in two modes, and a first mode of discovering an H-SMF may include: in case that the V-SMF may obtain the EAS deployment information of the HPLMN based on local configuration or may obtain the EAS deployment information of the HPLMN by subscribing to the NEF in the VPLMN, the V-SMF may determine the target DNAI based on the EAS deployment information and the second information in the first indication information (such as the EAS IP replacement information or the information of the target EAS), and then the V-SMF may transmit the target DNAI to the V-AMF by calling *Nsmf_PDUSession_SMContextStatusNotify.* Furthermore, the V-AMF may select an H-SMF based on the target DNAI. The H-SMF may transmit an *Nsmf_PDUSession_Context request* to the V-SMF.

In an embodiment, the V-SMF may discover an H-SMF in two modes, and a second mode of discovering an H-SMF may include: the V-SMF may request the NRF (vNRF) in the VPLMN to discover an H-SMF by calling *Nnrf_NFDiscovery_Request* (including the ID of the home PLMN and the ID of the visited PLMN). vNRF queries the NRF (hNRF) in the HPLMN and may discover the H-SMF based on the query result.

Step 604: the V-SMF inserts or reselects a UL CL/BP V-UPF, and transmits the second indication information to the H-SMF.

In an embodiment, the V-SMF may transmit the second indication information to the H-SMF through the *Nsmf_PDUSession_Update request,* where the second indication information may include the first information and the second information. The first information may be inter-PLMN relocation, and the second information may be the EAS IP replacement information or the information of the target EAS.

Step 605: the H-SMF selects an H-PSA UPF and configures a routing rule.

In an embodiment, the H-SMF may insert or reselect an H-PSA UPF based on the second information (such as the EAS IP replacement information or the information of the target EAS) in the second indication information.

In an embodiment, after inserting or reselecting the H-PSA UPF, the H-SMF may configure a routing rule to the H-PSA UPF, where the routing rule is used for transmitting data with the target address as the target EAS address transmitted from the UE to the target EAS.

In an embodiment, in case that the second information received by the H-SMF is the EAS IP replacement information, the H-SMF may configure the EAS IP replacement information to the H-PSA.

Step 606: the H-SMF replies with acknowledgement information to the V-SMF.

In an embodiment, the H-SMF may reply with acknowledgement information to the V-SMF, where the acknowledgement information may include tunnel information for uplink data to the H-PSA UPF.

Step 607: the V-SMF configures a routing rule to the UL CL/BP V-UPF after receiving the acknowledgement information form the H-SMF.

In an embodiment, after receiving the acknowledgement information from the H-SMF, the V-SMF may configure a routing rule to the UL CL/BP V-UPF to forward data transmitted from UE with the source EAS address or the target EAS address as the target address to the H-PSA UPF.

In an embodiment, FIG. 7 is a sixth schematic flowchart of a method for relocating edge application server according to an embodiment of the present application. The target EAS may be deployed in PLMN1 (HPLMN) in FIG. 5, and the V-SMF may not insert a UL CL/BP V-UPF. Data may be forwarded to the target EAS by configuring a routing rule to the V-PSA UPF. As shown in FIG. 7, the method for relocating edge application server provided in the embodiments of the present application may include step 700 to step 707.

Step 700: an LBO PDU session is established.

In an embodiment, the UE is currently roaming to PLMN2 (VPLMN), and establishes an LBO PDU session to access EAS2 deployed by OP1 in PLMN2 to use edge services.

Step 701: an AF obtains the first indication information and transmits the first indication information.

In an embodiment, when EAS relocation occurs (e.g., triggered internally in AF due to EAS load, maintenance, etc.), the AF (i.e., AF (V-AF) in VPLMN) may determine that EAS2 is unavailable and needs to be relocated to EAS deployed in PLMN1 (e.g., EAS1 deployed by OP1). The AF may determine the target EAS based on information such as UE subscription, federated OP protocol (e.g., federation agreement between different OPs), and whether candidate EAS is currently available (e.g., information obtained through application layer interaction).

In an embodiment, the AF may transmit the first indication information to the NEF by calling *NnefTrafficInfluence_Create* or *NnefTrafficInfluence_Update* service operations, or may transmit the first indication information to the PCF by calling *Npcf_PolicyAuthoritation_Create* or *Npcf_PolicyAuthoritation_Update.* The transmitted first indication information may include one or more types of the following information:
first information: inter-PLMN relocation (used to indicate to relocate EAS to different PLMNs) and/or an PLMN ID (identifier of the PLMN where the target EAS is located); or
second information: EAS IP replacement information or information of the target EAS.

In an embodiment, in case that 5GC supports EAS IP replacement, the AF may transmit the EAS IP replacement information (such as target EAS IP address, port number, etc.) to the network.

In an embodiment, the AF may transmit the information of the target EAS (such as the target EAS IP address) to the network, and transmit the information of the target EAS to the UE through the application layer.

Step 702: the V-SMF receives the first indication information.

In an embodiment, the V-PCF may receive the first indication information from the NEF or AF, and then generate a PCC rule including the first indication information. The V-PCF may transmit the first indication information to the V-SMF by calling *Npcf_SMPolicyControl_UpdateNotify,* where the first indication information may include the first information, the first information may include inter-PLMN relocation or the PLMN ID.

Step 703: the V-SMF selects the H-SMF.

In an embodiment, the procedure of V-SMF selecting an H-SMF may be a procedure of V-SMF discovering an H-SMF.

In an embodiment, the V-SMF may discover an H-SMF in two ways, where the first way of discovering an H-SMF may include: in case that the V-SMF may obtain the EAS deployment information of the HPLMN based on local configuration or may obtain the EAS deployment information of the HPLMN by subscribing to the NEF in the VPLMN, the V-SMF may determine the target DNAI based on the EAS deployment information and the second information (such as the EAS IP replacement information or the information of the target EAS) in the first indication information, and then the V-SMF may transmit the target DNAI to the V-AMF by calling *Nsmf_PDUSession_SMContextStatusNotify.* Furthermore, the V-AMF may select an H-SMF based on the target DNAI. The H-SMF may transmit an *Nsmf_PDUSession_Context request* to the V-SMF.

In an embodiment, the V-SMF may discover an H-SMF in two ways, where the second way of discovering an H-SMF may include: the V-SMF may request the NRF (vNRF) in the VPLMN to discover an H-SMF by calling *Nnrf_NFDiscovery_Request* (including the ID of the home PLMN and the ID of the visited PLMN). vNRF queries the NRF (hNRF) in the HPLMN and may discover the H-SMF based on the query result.

Step 704: the V-SMF transmits the second indication information to the H-SMF.

In an embodiment, the V-SMF may transmit the second indication information to the H-SMF through the *Nsmf_PDUSession_Update request,* where the second indication information may include the first information and the second information. The first information may be inter-PLMN relocation, and the second information may be the EAS IP replacement information or the information of the target EAS.

Step 705: the H-SMF selects an H-PSA UPF and configures a routing rule.

In an embodiment, the H-SMF may insert or reselect an H-PSA UPF based on the second information (such as the EAS IP replacement information or the information of the target EAS) in the second indication information.

In an embodiment, after inserting or reselecting the H-PSA UPF, the H-SMF may configure a routing rule to the H-PSA UPF, where the routing rule is used for transmitting data with the target address as the target EAS address transmitted from the UE to the target EAS.

In an embodiment, in case that the second information received by the H-SMF is the EAS IP replacement information, the H-SMF may configure the EAS IP replacement information to the H-PSA.

Step 706: the H-SMF replies with acknowledgement information to the V-SMF.

In an embodiment, the H-SMF may reply with acknowledgement information to the V-SMF, which may include tunnel information for uplink data to the H-PSA UPF.

Step 707: the V-SMF configures a routing rule to the UL CL/BP V-UPF after receiving the acknowledgement information form the H-SMF.

In an embodiment, after receiving the acknowledgement information from the H-SMF, the V-SMF may configure a routing rule to the V-PSA UPF to forward data transmitted from UE with the source EAS address or the target EAS address as the target address to the H-PSA UPF.

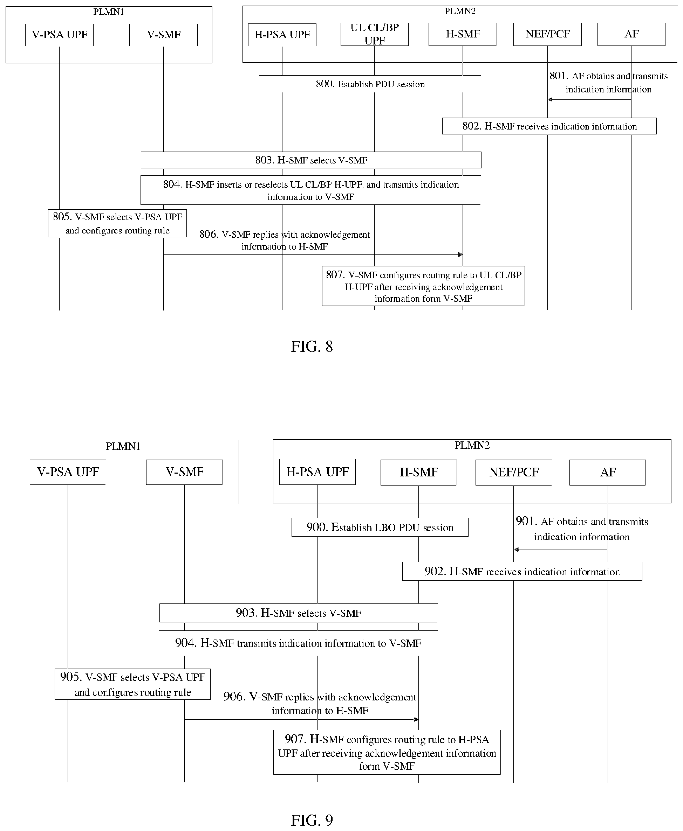

In an embodiment, FIG. 8 is a seventh schematic flowchart of a method for relocating edge application server according to an embodiment of the present application. The target EAS may be deployed in PLMN2 (VPLMN) in FIG. 5, and the H-SMF may insert a UL CL/BP H-UPF and configure a routing rule to forward data to the target EAS. As shown in FIG. 8, the method for relocating edge application server provided in the embodiments of the present application may include step 800 to step 807.

Step 800: a PDU session is established.

In an embodiment, the UE establishes the PDU session and accesses EAS1 deployed by OP1 in PLMN1 to use edge services.

Step 801: an AF obtains the first indication information and transmits the first indication information.

In an embodiment, when EAS relocation occurs (e.g., triggered internally in the AF due to EAS load, maintenance, etc.), the AF (i.e., AF (H-AF) in HPLMN) may determine that EAS1 is unavailable and needs to be relocated to EAS deployed in PLMN2 (e.g., EAS2 deployed by OP1). The AF may determine the target EAS based on information such as UE subscription, federated OP protocol (e.g., federation agreement between different OPs), and whether candidate EAS is currently available (e.g., information obtained through application layer interaction).

In an embodiment, the AF may transmit the first indication information to the NEF by calling *NnefTrafficInfluence_Create* or *NnefTrafficInfluence_Update* service operations, or may transmit the first indication information to the PCF by calling *Npcf_PolicyAuthoritation_Create* or *Npcf_PolicyAuthoritation_Update.* The transmitted first indication information may include one or more types of the following information:
first information: inter-PLMN relocation (used to indicate to relocate EAS to different PLMNs) and/or an PLMN ID (identifier of the PLMN where the target EAS is located); or
second information: EAS IP replacement information or information of the target EAS.

In an embodiment, in case that 5GC supports EAS IP replacement, the AF may transmit the EAS IP replacement information (such as target EAS IP address, port number, etc.) to the network.

In an embodiment, the AF may transmit the information of the target EAS (such as the target EAS IP address) to the network, and transmit the information of the target EAS to the UE through the application layer.

Step 802: the H-SMF receives the first indication information.

In an embodiment, the H-PCF may receive the first indication information from the NEF or AF.

In an embodiment, after receiving the first indication information, the H-PCF may determine whether the UE is authorized to access the VPLMN based on the UE information. In case that it is determined that the UE is authorized to access, the H-PCF may generate a PCC rule including the first indication information. The H-PCF may transmit the first indication information to the H-SMF by calling *Npcf_SMPolicyControl_UpdateNotify,* where the first indication information may include the first information, the first information may include inter-PLMN relocation or the PLMN ID.

Step 803: the H-SMF selects a V-SMF.

In an embodiment, the procedure of H-SMF selecting a V-SMF may be a procedure of H-SMF discovering a V-SMF.

In an embodiment, the H-SMF may discover a V-SMF in two ways, where the first way of discovering a V-SMF may include: in case that the H-SMF may obtain the EAS deployment information of the VPLMN based on local configuration or may obtain the EAS deployment information of the VPLMN by subscribing to the NEF in the HPLMN, the H-SMF may determine the target DNAI based on the EAS deployment information and the second information (such as the EAS IP replacement information or the information of the target EAS) in the first indication information, and then the H-SMF may transmit the target DNAI to the H-AMF by calling *Nsmf_PDUSession_SMContextStatusNotify.* Furthermore, the H-AMF may select a V-SMF based on the target DNAI. The V-SMF may transmit an *Nsmf_PDUSession_Context request* to the H-SMF.

In an embodiment, the H-SMF may discover a V-SMF in two ways, where the second way of discovering a V-SMF may include: the H-SMF may request the NRF (hNRF) in HPLMN to discovery a V-SMF by calling *Nnrf_NFDiscovery_Request* (including the ID of the home PLMN and the ID of the visited PLMN). hNRF queries the NRF (vNRF) in the VPLMN, and the V-SMF may be discovered based on the query result.

Step 804: the H-SMF inserts or reselects a UL CL/BP H-UPF, and transmits the second indication information to the V-SMF.

In an embodiment, the H-SMF may transmit the second indication information to the V-SMF through the *Nsmf_PDUSession_Update request,* where the second indication information may include the first information and the second information. The first information may be inter-PLMN relocation, and the second information may be the EAS IP replacement information or the information of the target EAS.

In an embodiment, before transmitting the second indication information, the H-SMF may request from the UDM (H-UDM) in the HPLMN whether the UE is authorized to access the VPLMN.

Step 805: the V-SMF selects a V-PSA UPF and configures a routing rule.

In an embodiment, the V-SMF may insert or reselect a V-PSA UPF based on the second information (such as the EAS IP replacement information or the information of the target EAS) in the second indication information.

In an embodiment, after inserting or reselecting the V-PSA UPF, the V-SMF may configure a routing rule to the V-PSA UPF, where the routing rule is used for transmitting data transmitted from the UE with the target address as the target EAS address to the target EAS.

In an embodiment, in case that the second information received by the V-SMF is the EAS IP replacement information, the V-SMF may configure the EAS IP replacement information to the V-PSA.

Step 806: the V-SMF replies with acknowledgement information to the H-SMF.

In an embodiment, the V-SMF may reply with acknowledgement information to the H-SMF, where the acknowledgement information may include tunnel information for uplink data to the V-PSA UPF.

Step 807: the H-SMF configures a routing rule to UL CL/BP H-UPF after receiving the acknowledgement information from the V-SMF.

In an embodiment, after receiving the acknowledgement information from the V-SMF, the H-SMF may configure a routing rule to UL CL/BP H-UPF to forward data transmitted from UE with the source EAS address or the target EAS address as the target address to the V-PSA UPF.

In an embodiment, FIG. 9 is an eighth schematic flowchart of a method for relocating edge application server according to an embodiment of the present application. The target EAS may be deployed in PLMN2 (VPLMN) in FIG. 5, and the H-SMF may not insert a UL CL/BP H-UPF. Data may be forwarded to the target EAS by configuring a routing rule to the H-PSA UPF. As shown in FIG. 9, the method for relocating edge application server provided in the embodiments of the present application may include step 900 to step 907.

Step 900: establishing a PDU session is established.

In an embodiment, the UE establishes the PDU session and accesses EAS1 deployed by OP1 in PLMN1 to use edge services.

Step 901: an AF obtains the first indication information and transmits the first indication information.

In an embodiment, when EAS relocation occurs (e.g., triggered internally in the AF due to EAS load, maintenance, etc.), the AF (i.e., AF (H-AF) in HPLMN) may determine that EAS1 is unavailable and needs to be relocated to EAS deployed in PLMN2 (e.g., EAS2 deployed by OP1). The AF may determine the target EAS based on information such as UE subscription, federated OP protocol (e.g., federation agreement between different OPs), and whether candidate EAS is currently available (e.g., information obtained through application layer interaction).

In an embodiment, the AF may transmit the first indication information to the NEF by calling *NnefTrafficInfluence_Create* or *NnefTrafficInfluence_Update* service operations, or may transmit the first indication information to the PCF by calling *Npcf_PolicyAuthoritation_Create* or *Npcf_PolicyAuthoritation_Update.* The transmitted first indication information may include one or more types of the following information:
first information: inter-PLMN relocation (used to indicate to relocate EAS to different PLMNs) and/or an PLMN ID (identifier of the PLMN where the target EAS is located); or
second information: EAS IP replacement information or information of the target EAS.

In an embodiment, in case that 5GC supports EAS IP replacement, the AF may transmit the EAS IP replacement information (such as target EAS IP address, port number, etc.) to the network.

In an embodiment, the AF may transmit the information of the target EAS (such as the target EAS IP address) to the network, and transmit the information of the target EAS to the UE through the application layer.

Step 902: the H-SMF receives the first indication information.

In an embodiment, the H-PCF may receive the first indication information from the NEF or AF.

In an embodiment, after receiving the first indication information, the H-PCF may determine whether the UE is authorized to access the VPLMN based on the UE information. In case that it is determined that the UE is authorized to access, the H-PCF may generate a PCC rule including the first indication information. The H-PCF may transmit the first indication information to the H-SMF by calling *Npcf_SMPolicyControl_UpdateNotify,* where the first indication information may include the first information, the first information may include inter-PLMN relocation or the PLMN ID.

Step 903: the H-SMF selects a V-SMF.

In an embodiment, the procedure of H-SMF selecting a V-SMF may be a procedure of H-SMF discovering a V-SMF.

In an embodiment, the H-SMF may discover a V-SMF in two ways, where the first way of discovering a V-SMF may include: in case that the H-SMF may obtain the EAS deployment information of the VPLMN based on local configuration or may obtain the EAS deployment information of the VPLMN by subscribing to the NEF in the HPLMN, the H-SMF may determine the target DNAI based on the EAS deployment information and the second information (such as the EAS IP replacement information or the information of the target EAS) in the first indication information, and then the H-SMF may transmit the target DNAI to the H-AMF by calling *Nsmf_PDUSession_SMContextStatusNotify.* Furthermore, the H-AMF may select a V-SMF based on the target DNAI. The V-SMF may transmit an *Nsmf_PDUSession_Context request* to the H-SMF.

In an embodiment, the H-SMF may discover a V-SMF in two ways, where the second way of discovering a V-SMF may include: the H-SMF may request the NRF (hNRF) in HPLMN to discovery a V-SMF by calling *Nnrf_NFDiscovery_Request* (including the ID of the home PLMN and the ID of the visited PLMN). hNRF queries the NRF (vNRF) in the VPLMN, and the V-SMF may be discovered based on the query result.

Step 904: the H-SMF transmits the second indication information to the V-SMF.

In an embodiment, the H-SMF may transmit the second indication information to the V-SMF through the *Nsmf_PDUSession_Update request,* where the second indication information may include the first information and the second information. The first information may be inter-PLMN relocation, and the second information may be the EAS IP replacement information or the information of the target EAS.

In an embodiment, before transmitting the second indication information, the H-SMF may request from the UDM (H-UDM) in the HPLMN whether the UE is authorized to access the VPLMN.

Step 905: the V-SMF selects a V-PSA UPF and configures a routing rule.

In an embodiment, the V-SMF may insert or reselect a V-PSA UPF based on the second information (such as the EAS IP replacement information or the information of the target EAS) in the second indication information.

In an embodiment, after inserting or reselecting the V-PSA UPF, the V-SMF may configure a routing rule to the V-PSA UPF, where the routing rule is used for transmitting data transmitted from the UE with the target address as the target EAS address to the target EAS.

In an embodiment, in case that the second information received by the V-SMF is the EAS IP replacement information, the V-SMF may configure the EAS IP replacement information to the V-PSA.

Step 906: the V-SMF replies with acknowledgement information to the H-SMF.

In an embodiment, the V-SMF may reply with acknowledgement information to the H-SMF, where the acknowledgement information may include tunnel information for uplink data to the V-PSA UPF.

Step 907: the H-SMF configures a routing rule to the H-PSA UPF after receiving the acknowledgement information from the V-SMF.

In an embodiment, after receiving the acknowledgement information from the V-SMF, the H-SMF may configure a routing rule to the H-PSA UPF to forward data transmitted from UE with the source EAS address or the target EAS address as the target address to the V-PSA UPF.

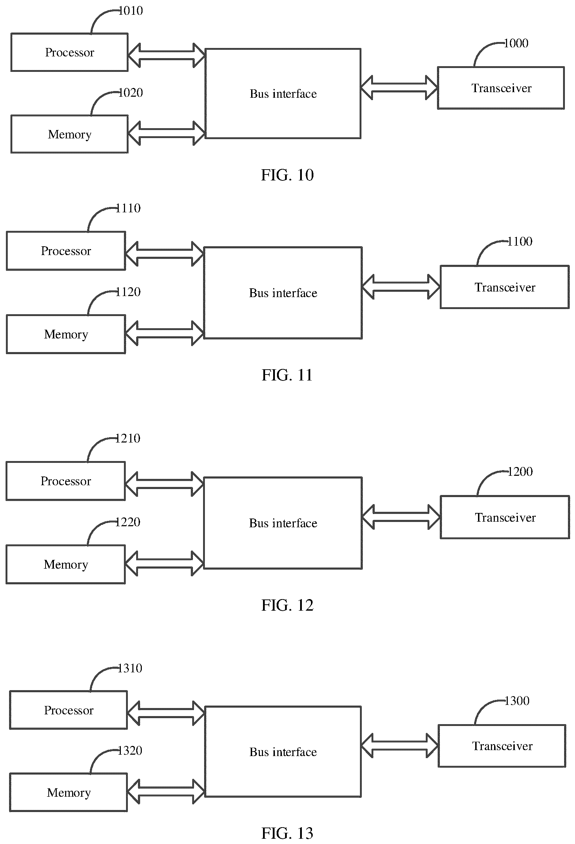

FIG. 10 is a schematic structural diagram of a first SMF according to an embodiment of the present application. As shown in FIG. 10, the network side device includes a memory 1020, a transceiver 1000, and a processor 1010, where
the memory 1020 is used for storing a computer program; the transceiver 1000 is used for receiving and transmitting data under control of the processor 1010; and the processor 1010 is used for reading the computer program in the memory 1020 and performing the following operations:
receiving first indication information, where the first indication information is used to indicate to relocate a source EAS in a first PLMN to a target EAS in a second PLMN; and
transmitting second indication information to a second SMF in the second PLMN, where the second indication information is determined based on the first indication information; and
configuring a first routing rule to a first UPF in the first PLMN after receiving the acknowledgement information transmitted from the second SMF, where the first routing rule is used to route uplink (UL) data to a second UPF in the second PLMN.

In an embodiment, the transceiver 1000 is used for receiving and transmitting data under control of the processor 1010.

In FIG. 10, a bus architecture may include any number of interconnected buses and bridges, which are linked together through various circuits of one or more processors represented by the processor 1010 and one or more memories represented by the memory 1020. The bus architecture may also link together various other circuits, such as peripherals, voltage regulators, and power management circuits, etc., which are well known in the art, and therefore are not further described in the present application. The bus interface provides an interface. The transceiver 1000 may include multiple elements, i.e., including a transmitter and a receiver, units for providing communication with various other devices over transmission media including wireless channels, wired channels, fiber optic cables, and the like. The processor 1010 is responsible for managing the bus architecture and general processing, and the memory 1020 may store data used by the processor 1010 when performing operations.

The processor 1010 may be a central processing unit (CPU), an application specific integrated circuit (ASIC), a field-programmable gate array (FPGA), or a complex programmable logic device (CPLD), the processor may also use a multi-core architecture.

In an embodiment, transmitting the second indication information to the second SMF in the second PLMN includes:
determining the second indication information based on the first indication information, where the second indication information is used to indicate to relocate the source EAS to the target EAS; and
transmitting the second indication information to the second SMF.

In an embodiment, the first UPF is a UPF that supports UL CL/BP or a UPF that supports PSA.

In an embodiment, configuring the first routing rule to the first UPF in the first PLMN includes:
in case that the first UPF is a UPF that supports UL CL/BP, configuring the first routing rule to the UPF that supports UL CL/BP based on the acknowledgement information transmitted from the second SMF; or
in case that the first UPF is a UPF that supports PSA, configuring the first routing rule to the UPF that supports PSA based on the acknowledgement information transmitted from the second SMF.

In an embodiment, before configuring the first routing rule to the UPF that supports UL CL/BP based on the acknowledgement information transmitted from the second SMF, the operations further include:
inserting or reselecting a UPF that supports UL CL/BP.

In an embodiment, in case that the first UPF supports PSA, configuring the first routing rule to the first UPF in the first PLMN includes:
configuring the first routing rule to the UPF that supports PSA based on the acknowledgement information transmitted from the second SMF.

In an embodiment, the acknowledgement information transmitted from the second SMF includes tunnel information corresponding to the second UPF, and configuring the first routing rule to the first UPF in the first PLMN includes:
configuring the first routing rule to the first UPF based on the tunnel information corresponding to the second UPF.

In an embodiment, the first indication information includes one or more types of the following information:
first information: an inter-PLMN relocation indication and/or an ID of the second PLMN; or
second information: EAS IP replacement information or information of the target EAS.

In an embodiment, receiving the first indication information includes:
receiving a policy and charging control (PCC) rule carrying the first indication information, where the PCC rule is generated by a policy control function (PCF) in the first PLMN.

In an embodiment, in case that the indication information includes the second information, receiving the indication information includes:
receiving the second information transmitted from an application function (AF) in the first PLMN.

In an embodiment, in case that the first indication information includes the second information, before transmitting the second indication information to the second SMF in the second PLMN, the operations further include:
determining a target data network access identifier (DNAI) based on the second information and Deployment information of EAS in the second PLMN;
transmitting a first request message carrying the target DNAI to a first access and mobility management function (AMF) in the first PLMN, where the first request message is used to request the first AMF to select an SMF in the second PLMN; and
determining the second SMF after receiving information of selected SMF transmitted from the first AMF.

In an embodiment, before determining the target DNAI based on the second information and the Deployment information of EAS in the second PLMN, the operations further include:
obtaining the Deployment information of EAS in the second PLMN based on local configuration of the first SMF; or
obtaining the Deployment information of EAS in the second PLMN by subscribing to the NEF in the first PLMN.

In an embodiment, before transmitting the second indication information to the second SMF in the second PLMN, the operations further include:
transmitting a second request message to a first network repository function (NRF) in the first PLMN, where the second request message is used to request the first NRF to query the SMF in the second PLMN; and
determining the second SMF after receiving the queried information transmitted from the first NRF.

In an embodiment, the second PLMN may be a visited PLMN or a home PLMN.

In an embodiment, before transmitting the second indication information to the second SMF in the second PLMN, the operations further include:
in case that the second PLMN is a visited PLMN, transmitting a third request message to unified data management (UDM) in the first PLMN, where the third request message is used to request acknowledgement whether a user equipment (UE) is authorized to access the second PLMN; and
determining that the UE is authorized to access the second PLMN after receiving the acknowledgement information replied from the UDM in the first PLMN.

In an embodiment, the second PLMN may be any of one or more third PLMNs, and the third PLMN is not the same as the first PLMN and includes one or more candidate EASs.

It should be noted that the first SMF provided in the embodiments of the present application may achieve all the method steps implemented by the method embodiment performed by the first SMF, and may achieve the same technical effects. The specific parts and beneficial effects that are the same as those of the method embodiment in this embodiment are not elaborated here.

FIG. 11 is a schematic structural diagram of a second SMF according to an embodiment of the present application. As shown in FIG. 11, the network side device includes a memory 1120, a transceiver 1100, and a processor 1110, where
the memory 1120 is used for storing a computer program; the transceiver 1100 is used for receiving and transmitting data under control of the processor 1110; and the processor 1110 is used for reading the computer program in the memory 1120 and performing the following operations:
receiving second indication information transmitted from a first SMF in a first public land mobile network (PLMN), where the second indication information is used to indicate to relocate a source edge application server (EAS) in the first PLMN to a target EAS in a second PLMN;
configuring a second routing rule to a second user plane function (UPF) in the second PLMN based on the second indication information, where the second UPF is determined by the second SMF based on the second indication information, and the second routing rule is used to route uplink (UL) data to the target EAS; and
transmitting acknowledgement information to the first SMF.

In an embodiment, the transceiver 1100 is used for receiving and transmitting data under control of the processor 1110.

In FIG. 11, the bus architecture may include any number of interconnected buses and bridges, which are linked together through various circuits of one or more processors represented by the processor 1110 and one or more memories represented by the memory 1120. The bus architecture may also link together various other circuits, such as peripherals, voltage regulators, and power management circuits, etc., which are well known in the art, and therefore are not further described in the present application. The bus interface provides an interface. The transceiver 1100 may include multiple elements, i.e., including a transmitter and a receiver, units for providing communication with various other devices over transmission media including wireless channels, wired channels, fiber optic cables, and the like. The processor 1110 is responsible for managing the bus architecture and general processing, and the memory 1120 may store data used by the processor 1110 when performing operations.

The processor 1110 may be a central processing unit (CPU), an application specific integrated circuit (ASIC), a field-programmable gate array (FPGA), or a complex programmable logic device (CPLD), the processor may also use a multi-core architecture.

In an embodiment, the second indication information includes one or more types of the following information:
first information: an inter-PLMN relocation indication; or
second information: EAS IP replacement information or information of the target EAS.

In an embodiment, in case that the second indication information includes the second information, before configuring the second routing rule to the second UPF in the second PLMN based on the second indication information, the operations further include:
inserting or reselecting the second UPF based on the second information.

In an embodiment, after receiving the second indication information transmitted from the first SMF in the first PLMN, the operations further include:
in case that the second indication information includes the second information and the second information is the EAS IP replacement information, configuring the EAS IP replacement information to the second UPF.

In an embodiment, after receiving the second indication information transmitted from the first SMF in the first PLMN, the operations further include:
configuring a third routing rule to the second UPF in the second PLMN based on the second indication information, where the third routing rule is used to route downlink data to a first UPF in the first PLMN.

In an embodiment, the acknowledgement information includes tunnel information corresponding to the second UPF.

It should be noted that the second SMF provided in the embodiments of the present application may achieve all the method steps implemented by the method embodiment performed by the second SMF, and may achieve the same technical effects. The specific parts and beneficial effects that are the same as those in this embodiment are not elaborated here.

FIG. 12 is a schematic structural diagram of an AF according to an embodiment of the present application. As shown in FIG. 12, the network side device includes a memory 1220, a transceiver 1200, and a processor 1210, where
the memory 1220 is used for storing a computer program; the transceiver 1200 is used for receiving and transmitting data under control of the processor 1210; and the processor 1210 is used for reading the computer program in the memory 1220 and performing the following operations:
obtaining first indication information, where the first indication information is used to indicate to relocate a source edge application server (EAS) in a first public land mobile network (PLMN) to a target EAS in a second PLMN; and
transmitting the first indication information.

In an embodiment, the transceiver 1200 is used for receiving and transmitting data under control of the processor 1210.

In FIG. 12, the bus architecture may include any number of interconnected buses and bridges, which are linked together through various circuits of one or more processors represented by the processor 1210 and one or more memories represented by the memory 1220. The bus architecture may also link together various other circuits, such as peripherals, voltage regulators, and power management circuits, etc., which are well known in the art, and therefore are not further described in the present application. The bus interface provides an interface. The transceiver 1200 may include multiple elements, i.e., including a transmitter and a receiver, units for providing communication with various other devices over transmission media including wireless channels, wired channels, fiber optic cables, and the like. The processor 1210 is responsible for managing the bus architecture and general processing, and the memory 1220 may store data used by the processor 1210 when performing operations.

The processor 1210 may be a central processing unit (CPU), an application specific integrated circuit (ASIC), a field-programmable gate array (FPGA), or a complex programmable logic device (CPLD), the processor may also use a multi-core architecture.

In an embodiment, the first indication information includes one or more types of the following information:
first information: an inter-PLMN relocation indication and/or an identifier (ID) of the second PLMN; or
second information: EAS IP replacement information or information of the target EAS.

In an embodiment, transmitting the first indication information includes:
transmitting the first indication information to the NEF in the first PLMN or the PCF in the first PLMN.

In an embodiment, transmitting the first indication information includes:
in case that the first indication information includes the second information, transmitting the second information to the first SMF in the first PLMN.

In an embodiment, transmitting the first indication information includes:
in case that the first indication information includes the second information, transmitting the second information to a user equipment (UE) through an application layer.

It should be noted that the above-mentioned AF provided in the embodiments of the present application may achieve all the method steps implemented by the method embodiment performed by the AF, and may achieve the same technical effects. The same parts and beneficial effects as the method embodiment in this embodiment are not described here.

FIG. 13 is a schematic structural diagram of a PCF according to an embodiment of the present application. As shown in FIG. 13, the network side device includes a memory 1320, a transceiver 1300, and a processor 1310, where
the memory 1320 is used for storing a computer program; the transceiver 1300 is used for transmitting and receiving data under control of the processor 1310; and the processor 1310 is used for reading the computer program in the memory 1320 and performing the following operations:
receiving first indication information, where the first indication information is used to indicate to relocate a source EAS in a first PLMN to a target EAS in a second PLMN; and
transmitting a PCC rule carrying the first indication information to the first SMF in the first PLMN based on the first indication information.

In an embodiment, the transceiver 1300 is used for receiving and transmitting data under control of the processor 1310.

In FIG. 13, the bus architecture may include any number of interconnected buses and bridges, which are linked together through various circuits of one or more processors represented by the processor 1310 and one or more memories represented by the memory 1320. The bus architecture may also link together various other circuits, such as peripherals, voltage regulators, and power management circuits, etc., which are well known in the art, and therefore are not further described in the present application. The bus interface provides an interface. The transceiver 1300 may include multiple elements, i.e., including a transmitter and a receiver, units for providing communication with various other devices over transmission media including wireless channels, wired channels, fiber optic cables, and the like. The processor 1310 is responsible for managing the bus architecture and general processing, and the memory 1320 may store data used by the processor 1310 when performing operations.

The processor 1310 may be a central processing unit (CPU), an application specific integrated circuit (ASIC), a field-programmable gate array (FPGA), or a complex programmable logic device (CPLD), the processor may also use a multi-core architecture.

In an embodiment, receiving the first indication information includes:
receiving the first indication information transmitted from an application function (AF) in the first PLMN; or
receiving the first indication information transmitted from a network exposure function (NEF) in the first PLMN.

In an embodiment, before transmitting the PCC rule carrying the first indication information to the first SMF in the first PLMN, the operations further include:
in case that the second PLMN is a visited PLMN, determining that a user equipment (UE) is authorized to access the visited PLMN, where the second PLMN is a PLMN where the target EAS is located; and
generating the PCC rule carrying the first indication information based on the first indication information.

In an embodiment, the first indication information includes one or more types of the following information:
first information: an inter-PLMN relocation indication and/or an identifier (ID) of the second PLMN; or
second information: EAS IP replacement information or information of the target EAS.

It should be noted that the above-mentioned PCF provided in the embodiments of the present application may achieve all the method steps implemented by the method embodiment performed by the PCF, and may achieve the same technical effects. The same parts and beneficial effects as the method embodiment in this embodiment are not described here.

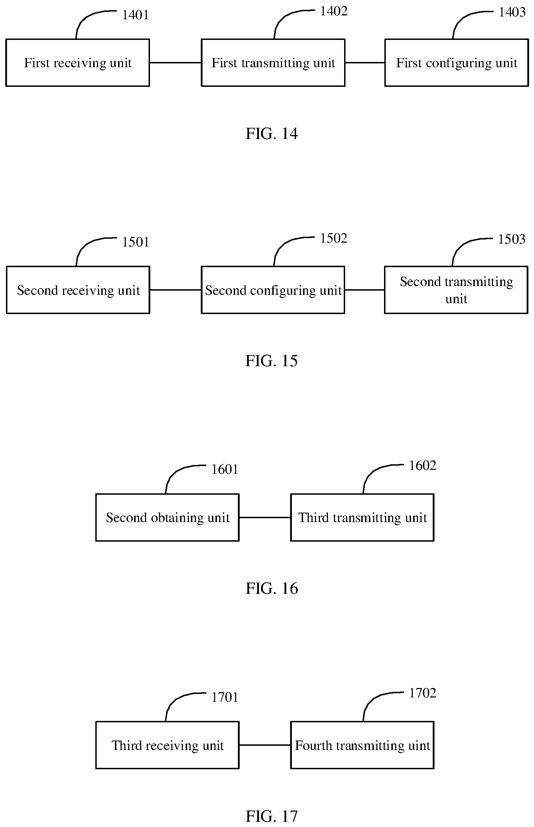

FIG. 14 is a first schematic structural diagram of an apparatus for relocating edge application server according to an embodiment of the present application. As shown in FIG. 14, the apparatus is used for the first SMF and includes: a first receiving unit 1401, a first transmitting unit 1402, and a first configuring unit 1403, where
the first receiving unit 1401 is used for receiving first indication information, where the first indication information is used to indicate to relocate a EAS in a first PLMN to a target EAS in a second PLMN;
the first transmitting unit 1402 is used for transmitting second indication information to a second SMF in the second PLMN, where the second indication information is determined based on the first indication information; and
the first configuring unit 1403 is used for configuring a first routing rule to a first UPF in the first PLMN after receiving acknowledgement information transmitted from the second SMF, where the first routing rule is used to route UL data to a second UPF in the second PLMN.

In an embodiment, the first transmitting unit is used for:
determining the second indication information based on the first indication information, where the second indication information is used to indicate to relocate the source EAS to the target EAS; and
transmitting the second indication information to the second SMF.

In an embodiment, the first UPF is a UPF that supports UL CL/BP or a UPF that supports PSA.

In an embodiment, the first configuring unit is used for:
in case that the first UPF is a UPF that supports UL CL/BP, configuring the first routing rule to the UPF that supports UL CL/BP based on the acknowledgement information transmitted from the second SMF; or
in case that the first UPF is a UPF that supports PSA, configuring the first routing rule to the UPF that supports PSA based on the acknowledgement information transmitted from the second SMF.

In an embodiment, the apparatus further includes a first selecting unit, where the first selecting unit is used for:
inserting or reselecting a UPF that supports UL CL/BP before configuring the first routing rule to the UPF that supports UL CL/BP based on the acknowledgement information transmitted from the second SMF.

In an embodiment, the acknowledgement information transmitted from the second SMF includes tunnel information corresponding to the second UPF, and the first configuring unit is used for:
configuring the first routing rule to the first UPF based on the tunnel information corresponding to the second UPF.

In an embodiment, the first indication information includes one or more types of the following information:
first information: an inter-PLMN relocation indication and/or an identifier (ID) of the second PLMN; or
second information: EAS IP replacement information or information of the target EAS.

In an embodiment, the first receiving unit is used for:
receiving a policy and charging control (PCC) rule carrying the first indication information, where the PCC rule is generated by a policy control function (PCF) in the first PLMN.

In an embodiment, the first receiving unit is used for:
in case that the first indication information includes the second information, receiving the second information transmitted from the AF in the first PLMN.

In an embodiment, the apparatus further includes a first determining unit, where in case that the first indication information includes the second information, before transmitting the second indication information to the second SMF in the second PLMN, the first determining unit is used for:
determining a target data network access identifier (DNAI) based on the second information and Deployment information of EAS in the second PLMN;
transmitting a first request message carrying the target DNAI to a first access and mobility management function (AMF) in the first PLMN, where the first request message is used to request the first AMF to select an SMF in the second PLMN; and
determining the second SMF after receiving information of selected SMF transmitted from the first AMF.

In an embodiment, the apparatus further includes a first obtaining unit, where before determining the target DNAI based on the second information and the Deployment information of EAS in the second PLMN, the first obtaining unit is used for:
obtaining the Deployment information of EAS in the second PLMN based on local configuration of the first SMF; or
obtaining the Deployment information of EAS in the second PLMN by subscribing to the NEF in the first PLMN.

In an embodiment, the apparatus further includes a second determining unit, where before transmitting the second indication information to the second SMF in the second PLMN, the second determining unit is used for:
transmitting a second request message to a first NRF in the first PLMN, where the second request message is used to request the first NRF to query the SMF in the second PLMN; and
determining the second SMF after receiving the queried information transmitted from the first NRF.

In an embodiment, the second PLMN may be a visited PLMN or a home PLMN.

In an embodiment, the apparatus further includes a third determining unit, where before transmitting the second indication information to the second SMF in the second PLMN, the third determining unit is used for:
in case that the second PLMN is a visited PLMN, transmitting a third request message to unified data management (UDM) in the first PLMN, where the third request message is used to request acknowledgement whether a user equipment (UE) is authorized to access the second PLMN; and
determining that the UE is authorized to access the second PLMN after receiving the acknowledgement information replied from the UDM in the first PLMN.

In an embodiment, the second PLMN may be any of one or more third PLMNs, and the third PLMN is not the same as the first PLMN and includes one or more candidate EASs.

FIG. 15 is a second schematic structural diagram of an apparatus for relocating edge application server according to an embodiment of the present application. As shown in FIG. 15, the apparatus is used for the second SMF and includes: a second receiving unit 1501, a second configuring unit 1502, and a second transmitting unit 1503, where
the second receiving unit 1501 is used for receiving second indication information transmitted from a first SMF in a first PLMN, where the second indication information is used to indicate to relocate a source EAS in the first PLMN to a target EAS in a second PLMN;
the second configuring unit 1502 is used for configuring a second routing rule to a second UPF in the second PLMN based on the second indication information, where the second UPF is determined by the second SMF based on the second indication information, and the second routing rule is used to route uplink (UL) data to the target EAS; and
the second transmitting unit 1503 is used for transmitting acknowledgement information to the first SMF.

In an embodiment, the second indication information includes one or more types of the following information:
first information: an inter-PLMN relocation indication; or
second information: EAS IP replacement information or information of the target EAS.

In an embodiment, the apparatus further includes a second selecting unit, where in case that the second indication information includes the second information, before configuring the second routing rule to the second UPF in the second PLMN based on the second indication information, the second selecting unit is used for:
inserting or reselecting the second UPF based on the second information.

In an embodiment, after receiving the second indication information transmitted from the first SMF in the first PLMN, the second configuring unit is further used for:
in case that the second indication information includes the second information and the second information is the EAS IP replacement information, configuring the EAS IP replacement information to the second UPF.

In an embodiment, after receiving the second indication information transmitted from the first SMF in the first PLMN, the second configuring unit is further used for:
configuring a third routing rule to the second UPF in the second PLMN based on the second indication information, where the third routing rule is used to route downlink data to a first UPF in the first PLMN.

In an embodiment, the acknowledgement information includes tunnel information corresponding to the second UPF.

FIG. 16 is a third schematic structural diagram of an apparatus for relocating edge application server according to an embodiment of the present application. As shown in FIG. 16, the apparatus is used for the AF and includes: a second obtaining unit 1601 and a third transmitting unit 1602, where
the second obtaining unit 1601 is used for obtaining first indication information, where the first indication information is used to indicate to relocate a source EAS in a first PLMN to a target EAS in a second PLMN; and
the third transmitting unit 1602 is used for transmitting the first indication information.

In an embodiment, the first indication information includes one or more types of the following information:
first information: an inter-PLMN relocation indication and/or an identifier (ID) of the second PLMN; or
second information: EAS IP replacement information or information of the target EAS.

In an embodiment, the third transmitting unit is used for:
transmitting the first indication information to a network exposure function (NEF) in the first PLMN or a policy control function (PCF) in the first PLMN.

In an embodiment, the third transmitting unit is used for:
in case that the first indication information includes the second information, transmitting the second information to a first session management function (SMF) in the first PLMN.

In an embodiment, the third transmitting unit is used for:
in case that the first indication information includes the second information, transmitting the second information to a user equipment (UE) through an application layer.

FIG. 17 is a fourth schematic structural diagram of an apparatus for relocating edge application server according to an embodiment of the present application. As shown in FIG. 17, the apparatus is used for the PCF and includes: a third receiving unit 1701 and a fourth transmitting unit 1702, where
the third receiving unit 1701 is used for receiving first indication information, where the first indication information is used to indicate to relocate a source EAS in a first PLMN to a target EAS in a second PLMN; and
the fourth transmitting unit 1702 is used for transmitting a PCC rule carrying the first indication information to a first SMF in the first PLMN based on the first indication information.

In an embodiment, the third receiving unit is used for:
receiving the first indication information transmitted from an application function (AF) in the first PLMN; or
receiving the first indication information transmitted from a network exposure function (NEF) in the first PLMN.

In an embodiment, the apparatus further includes a generating unit, before transmitting the PCC rule carrying the first indication information to the first SMF in the first PLMN, the generating unit is used for:
in case that the second PLMN is a visited PLMN, determining that a user equipment (UE) is authorized to access the visited PLMN, where the second PLMN is a PLMN where the target EAS is located; and
generating the PCC rule carrying the first indication information based on the first indication information.

In an embodiment, the first indication information includes one or more types of the following information:
first information: an inter-PLMN relocation indication and/or an identifier (ID) of the second PLMN; or
second information: EAS IP replacement information or information of the target EAS.

It should be noted that the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

In case that the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a flash disk, a mobile hard disk, a read-only memory (ROM), a random access memory (RAM), a magnetic disk, or a compact disk.

It should be noted that the above-mentioned apparatus provided in the embodiments of the present application may achieve all the method steps implemented in the above-mentioned method embodiment, and may achieve the same technical effects. The specific descriptions of the same parts and beneficial effects as the method embodiment in this embodiment are not repeated here.

An embodiment of the present application further provides a processor-readable storage medium storing a computer program, where the computer program causes a processor to perform the methods provided in the above embodiments, for example, the method includes:
receiving first indication information, where the first indication information is used to indicate to relocate a source EAS in a first PLMN to a target EAS in a second PLMN;
transmitting second indication information to a second SMF in the second PLMN, where the second indication information is determined based on the first indication information; and
configuring a first routing rule to the first UPF in the first PLMN after receiving the acknowledgement information transmitted from the second SMF, where the first routing rule is used to route uplink data to the second UPF in the second PLMN.

Alternatively, for example, the method includes:
receiving second indication information transmitted from a first SMF in a first public land mobile network (PLMN), where the second indication information is used to indicate to relocate a source edge application server (EAS) in the first PLMN to a target EAS in a second PLMN;
configuring a second routing rule to the second user plane function (UPF) in the second PLMN based on the second indication information, where the second UPF is determined by the second SMF based on the second indication information, and the second routing rule is used to route uplink (UL) data to the target EAS; and
transmitting acknowledgement information to the first SMF.

Alternatively, for example, the method includes:
obtaining first indication information, where the first indication information is used to indicate to relocate a source edge application server (EAS) in a first public land mobile network (PLMN) to a target EAS in a second PLMN; and
transmitting the first indication information.

Alternatively, for example, the method includes:
receiving first indication information, where the first indication information is used to indicate to relocate a source EAS in a first PLMN to a target EAS in a second PLMN; and
transmitting a policy and charging control (PCC) rule carrying the first indication information to a first session management function (SMF) in the first PLMN based on the first indication information.

The processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for relocating edge application server, performed by a first session management function (SMF), comprising:
receiving first indication information, wherein the first indication information is used to indicate to relocate a source edge application server (EAS) in a first public land mobile network (PLMN) to a target EAS in a second PLMN;
transmitting second indication information to a second SMF in the second PLMN, wherein the second indication information is determined based on the first indication information; and
configuring a first routing rule to a first user plane function (UPF) in the first PLMN after receiving acknowledgement information transmitted from the second SMF, wherein the first routing rule is used to route uplink (UL) data to a second UPF in the second PLMN.

2. The method of claim 1, wherein transmitting the second indication information to the second SMF in the second PLMN comprises:
determining the second indication information based on the first indication information, wherein the second indication information is used to indicate to relocate the source EAS to the target EAS; and
transmitting the second indication information to the second SMF.

3. The method of claim 1, wherein the first UPF is a UPF that supports UL classifier (CL)/branching point (BP) or a UPF that supports protocol data unit (PDU) session anchor (PSA).

4. The method of claim 3, wherein configuring the first routing rule to the first UPF in the first PLMN comprises:
configuring the first routing rule to the first UPF based on the acknowledgement information transmitted from the second SMF.

5. The method of claim 4, wherein before configuring the first routing rule to the first UPF based on the acknowledgement information transmitted from the second SMF, the method further comprises:
inserting or reselecting a UPF that supports UL CL/BP.

6. The method of claim 1, wherein the first indication information comprises one or more types of the following information:
first information: an inter-PLMN relocation indication and/or an identifier (ID) of the second PLMN; or
second information: EAS Internet Protocol (IP) replacement information or information of the target EAS.

7. The method of claim 1 or 6, wherein receiving the first indication information comprises:
receiving a policy and charging control (PCC) rule carrying the first indication information, wherein the PCC rule is generated by a policy control function (PCF) in the first PLMN.

8. The method of claim 6, wherein in case that the first indication information comprises the second information, receiving the first indication information comprises:
receiving the second information transmitted from an application function (AF) in the first PLMN.

9. The method of claim 6, wherein in case that the first indication information comprises the second information, before transmitting the second indication information to the second SMF in the second PLMN, the method further comprises:
determining a target data network access identifier (DNAI) based on the second information and Deployment information of EAS in the second PLMN;
transmitting a first request message carrying the target DNAI to a first access and mobility management function (AMF) in the first PLMN, wherein the first request message is used to request the first AMF to select an SMF in the second PLMN; and
determining the second SMF after receiving information of selected SMF transmitted from the first AMF.

10. The method of claim 1, wherein before transmitting the second indication information to the second SMF in the second PLMN, the method further comprises:
in case that the second PLMN is a visited PLMN, transmitting a third request message to unified data management (UDM) in the first PLMN, wherein the third request message is used to request acknowledgement whether a user equipment (UE) is authorized to access the second PLMN; and
determining that the UE is authorized to access the second PLMN after receiving acknowledgement information replied from the UDM in the first PLMN.

11. A method for relocating edge application server, performed by a second session management function (SMF), comprising:
receiving second indication information transmitted from a first SMF in a first public land mobile network (PLMN), wherein the second indication information is used to indicate to relocate a source edge application server (EAS) in the first PLMN to a target EAS in a second PLMN;
configuring a second routing rule to a second user plane function (UPF) in the second PLMN based on the second indication information, wherein the second UPF is determined by the second SMF based on the second indication information, and the second routing rule is used to route uplink (UL) data to the target EAS; and
transmitting acknowledgement information to the first SMF.

12. The method of claim 11, wherein the second indication information comprises one or more types of the following information:
first information: an inter-PLMN relocation indication; or
second information: EAS Internet Protocol (IP) replacement information or information of the target EAS.

13. The method of claim 12, wherein in case that the second indication information comprises the second information, before configuring the second routing rule to the second UPF in the second PLMN based on the second indication information, the method further comprises:
inserting or reselecting the second UPF based on the second information.

14. The method of claim 12, wherein after receiving the second indication information transmitted from the first SMF in the first PLMN, the method further comprises:
in case that the second indication information comprises the second information and the second information is the EAS IP replacement information, configuring the EAS IP replacement information to the second UPF.

15. The method of any of claims 11 to 14, wherein after receiving the second indication information transmitted from the first SMF in the first PLMN, the method further comprises:
configuring a third routing rule to the second UPF in the second PLMN based on the second indication information, wherein the third routing rule is used to route downlink data to a first UPF in the first PLMN.

16. The method of any of claims 11 to 14, wherein the acknowledgement information comprises tunnel information corresponding to the second UPF.

17. A method for relocating edge application server, performed by an application function (AF), comprising:
obtaining first indication information, wherein the first indication information is used to indicate to relocate a source edge application server (EAS) in a first public land mobile network (PLMN) to a target EAS in a second PLMN; and
transmitting the first indication information.

18. The method of claim 17, wherein the first indication information comprises one or more types of the following information:
first information: an inter-PLMN relocation indication and/or an identifier (ID) of the second PLMN; or
second information: EAS Internet Protocol (IP) replacement information or information of the target EAS.

19. The method of claim 17 or 18, wherein transmitting the first indication information comprises:
transmitting the first indication information to a network exposure function (NEF) in the first PLMN or a policy control function (PCF) in the first PLMN.

20. The method of claim 18, wherein transmitting the first indication information comprises:
in case that the first indication information comprises the second information, transmitting the second information to a first session management function (SMF) in the first PLMN.

21. The method of claim 18, wherein transmitting the first indication information comprises:
in case that the first indication information comprises the second information, transmitting the second information to a user equipment (UE) through an application layer.

22. A method for relocating edge application server, performed by a policy control function (PCF), comprising:
receiving first indication information, wherein the first indication information is used to indicate to relocate a source edge application server (EAS) in a first public land mobile network (PLMN) to a target EAS in a second PLMN; and
transmitting a policy and charging control (PCC) rule carrying the first indication information to a first session management function (SMF) in the first PLMN based on the first indication information.

23. The method of claim 22, wherein receiving the first indication information comprises:
receiving the first indication information transmitted from an application function (AF) in the first PLMN; or
receiving the first indication information transmitted from a network exposure function (NEF) in the first PLMN.

24. The method of claim 22, wherein before transmitting the PCC rule carrying the first indication information to the first SMF in the first PLMN, the method further comprises:
in case that the second PLMN is a visited PLMN, determining that a user equipment (UE) is authorized to access the visited PLMN, wherein the second PLMN is a PLMN where the target EAS is located; and
generating the PCC rule carrying the first indication information based on the first indication information.

25. The method of any of claims 22 to 24, wherein the first indication information comprises one or more types of the following information:
first information: an inter-PLMN relocation indication and/or an identifier (ID) of the second PLMN; or
second information: EAS Internet Protocol (IP) replacement information or information of the target EAS.

26. A first session management function (SMF), comprising a memory, a transceiver, and a processor, wherein
the memory is used for storing a computer program; the transceiver is used for receiving and transmitting data under control of the processor; and the processor is used for reading the computer program in the memory and performing the following operations:
receiving first indication information, wherein the first indication information is used to indicate to relocate a source edge application server (EAS) in a first public land mobile network (PLMN) to a target EAS in a second PLMN;
transmitting second indication information to a second SMF in the second PLMN, wherein the second indication information is determined based on the first indication information; and
configuring a first routing rule to a first user plane function (UPF) in the first PLMN after receiving the acknowledgement information transmitted from the second SMF, wherein the first routing rule is used to route uplink (UL) data to a second UPF in the second PLMN.

27. The first SMF of claim 26, wherein transmitting the second indication information to the second SMF in the second PLMN comprises:
determining the second indication information based on the first indication information, wherein the second indication information is used to indicate to relocate the source EAS to the target EAS; and
transmitting the second indication information to the second SMF.

28. The first SMF of claim 26, wherein the first UPF is a UPF that supports UL classifier (CL)/branching point (BP) or a UPF that supports protocol data unit (PDU) session anchor (PSA).

29. The first SMF of claim 28, wherein configuring the first routing rule to the first UPF in the first PLMN comprises:
configuring the first routing rule to the first UPF based on the acknowledgement information transmitted from the second SMF.

30. The first SMF of claim 29, wherein before configuring the first routing rule to the first UPF based on the acknowledgement information transmitted from the second SMF, the operations further comprise:
inserting or reselecting a UPF that supports UL CL/BP.

31. The first SMF of claim 26, wherein the first indication information comprises one or more types of the following information:
first information: an inter-PLMN relocation indication and/or an identifier (ID) of the second PLMN; or
second information: EAS Internet Protocol (IP) replacement information or information of the target EAS.

32. The first SMF of claim 26 or 31, wherein receiving the first indication information comprises:
receiving a policy and charging control (PCC) rule carrying the first indication information, wherein the PCC rule is generated by a policy control function (PCF) in the first PLMN.

33. The first SMF of claim 31, wherein in case that the first indication information comprises the second information, receiving the first indication information comprises:
receiving the second information transmitted from an application function (AF) in the first PLMN.

34. The first SMF of claim 31, wherein in case that the first indication information comprises the second information, before transmitting the second indication information to the second SMF in the second PLMN, the operations further comprise:
determining a target data network access identifier (DNAI) based on the second information and Deployment information of EAS in the second PLMN;
transmitting a first request message carrying the target DNAI to a first access and mobility management function (AMF) in the first PLMN, wherein the first request message is used to request the first AMF to select an SMF in the second PLMN; and
determining the second SMF after receiving information of selected SMF transmitted from the first AMF.

35. The first SMF of claim 26, wherein before transmitting the second indication information to the second SMF in the second PLMN, the operations further comprise:
in case that the second PLMN is a visited PLMN, transmitting a third request message to unified data management (UDM) in the first PLMN, wherein the third request message is used to request acknowledgement whether a user equipment (UE) is authorized to access the second PLMN; and
determining that the UE is authorized to access the second PLMN after receiving acknowledgement information replied from the UDM in the first PLMN.

36. A second session management function (SMF), comprising a memory, a transceiver, and a processor, wherein
the memory is used for storing a computer program; the transceiver is used for receiving and transmitting data under control of the processor; and the processor is used for reading the computer program in the memory and performing the following operations:
receiving second indication information transmitted from a first SMF in a first public land mobile network (PLMN), wherein the second indication information is used to indicate to relocate a source edge application server (EAS) in the first PLMN to a target EAS in a second PLMN;
configuring a second routing rule to a second user plane function (UPF) in the second PLMN based on the second indication information, wherein the second UPF is determined by the second SMF based on the second indication information, and the second routing rule is used to route uplink (UL) data to the target EAS; and
transmitting acknowledgement information to the first SMF.

37. The second SMF of claim 36, wherein the second indication information comprises one or more types of the following information:
first information: an inter-PLMN relocation indication; or
second information: EAS Internet Protocol (IP) replacement information or information of the target EAS.

38. The second SMF of claim 37, wherein in case that the second indication information comprises the second information, before configuring the second routing rule to the second UPF in the second PLMN based on the second indication information, the operations further comprise:
inserting or reselecting the second UPF based on the second information.

39. The second SMF of claim 37, wherein after receiving the second indication information transmitted from the first SMF in the first PLMN, the operations further comprise:
in case that the second indication information comprises the second information and the second information is the EAS IP replacement information, configuring the EAS IP replacement information to the second UPF.

40. The second SMF of any of claims 36 to 39, wherein after receiving the second indication information transmitted from the first SMF in the first PLMN, the operations further comprise:
configuring a third routing rule to the second UPF in the second PLMN based on the second indication information, wherein the third routing rule is used to route downlink data to a first UPF in the first PLMN.

41. The second SMF of any of claims 36 to 39, wherein the acknowledgement information comprises tunnel information corresponding to the second UPF.

42. An application function (AF), comprising a memory, a transceiver, and a processor, wherein
the memory is used for storing a computer program; the transceiver is used for receiving and transmitting data under control of the processor; and the processor is used for reading the computer program in the memory and performing the following operations:
obtaining first indication information, wherein the first indication information is used to indicate to relocate a source edge application server (EAS) in a first public land mobile network (PLMN) to a target EAS in a second PLMN; and
transmitting the first indication information.

43. The AF of claim 42, wherein the first indication information comprises one or more types of the following information:
first information: an inter-PLMN relocation indication and/or an identifier (ID) of the second PLMN; or
second information: EAS Internet Protocol (IP) replacement information or information of the target EAS.

44. The AF of claim 42 or 43, wherein transmitting the first indication information comprises:
transmitting the first indication information to a network exposure function (NEF) in the first PLMN or a policy control function (PCF) in the first PLMN.

45. The AF of claim 43, wherein transmitting the first indication information comprises:
in case that the first indication information comprises the second information, transmitting the second information to a first session management function (SMF) in the first PLMN.

46. The AF of claim 43, wherein transmitting the first indication information comprises:
in case that the first indication information comprises the second information, transmitting the second information to a user equipment (UE) through an application layer.

47. A policy control function (PCF), comprising a memory, a transceiver, and a processor, wherein
the memory is used for storing a computer program; the transceiver is used for receiving and transmitting data under control of the processor; and the processor is used for reading the computer program in the memory and performing the following operations:
receiving first indication information, wherein the first indication information is used to indicate to relocate a source edge application server (EAS) in a first public land mobile network (PLMN) to a target EAS in a second PLMN; and
transmitting a policy and charging control (PCC) rule carrying the first indication information to a first session management function (SMF) in the first PLMN based on the first indication information.

48. The PCF of claim 47, wherein receiving the first indication information comprises:
receiving the first indication information transmitted from an application function (AF) in the first PLMN; or
receiving the first indication information transmitted from a network exposure function (NEF) in the first PLMN.

49. The PCF of claim 47, wherein before transmitting the PCC rule carrying the first indication information to the first SMF in the first PLMN, the operations further comprise:
in case that the second PLMN is a visited PLMN, determining that a user equipment (UE) is authorized to access the visited PLMN, wherein the second PLMN is a PLMN where the target EAS is located; and
generating the PCC rule carrying the first indication information based on the first indication information.

50. The PCF of any of claims 47 to 49, wherein the first indication information comprises one or more types of the following information:
first information: an inter-PLMN relocation indication and/or an identifier (ID) of the second PLMN; or
second information: EAS Internet Protocol (IP) replacement information or information of the target EAS.

51. An apparatus for relocating edge application server, used in a first session management function (SMF), comprising:
a first receiving unit, used for receiving first indication information, wherein the first indication information is used to indicate to relocate a source edge application server (EAS) in a first public land mobile network (PLMN) to a target EAS in a second PLMN;
a first transmitting unit, used for transmitting second indication information to a second SMF in the second PLMN, wherein the second indication information is determined based on the first indication information; and
a first configuring unit, used for configuring a first routing rule to a first user plane function (UPF) in the first PLMN after receiving acknowledgement information transmitted from the second SMF, wherein the first routing rule is used to route uplink (UL) data to a second user plane function (UPF) in the second PLMN.

52. The apparatus of claim 51, wherein the first transmitting unit is used for:
determining the second indication information based on the first indication information, wherein the second indication information is used to indicate to relocate the source EAS to the target EAS; and
transmitting the second indication information to the second SMF.

53. The apparatus of claim 51, wherein the first UPF is a UPF that supports UL classifier (CL)/branching point (BP) or a UPF that supports protocol data unit (PDU) session anchor (PSA).

54. The apparatus of claim 53, wherein the first configuring unit is used for:
configuring the first routing rule to the first UPF based on the acknowledgement information transmitted from the second SMF.

55. The apparatus of claim 54, wherein the apparatus further comprises a first selecting unit, wherein the first selecting unit is used for:
inserting or reselecting a UPF that supports UL CL/BP before configuring the first routing rule to the first UPF based on the acknowledgement information transmitted from the second SMF.

56. The apparatus of claim 51, wherein the first indication information comprises one or more types of the following information:
first information: an inter-PLMN relocation indication and/or an identifier (ID) of the second PLMN; or
second information: EAS Internet Protocol (IP) replacement information or information of the target EAS.

57. The apparatus of claim 51 or 56, wherein the first receiving unit is used for:
receiving a policy and charging control (PCC) rule carrying the first indication information, wherein the PCC rule is generated by a policy control function (PCF) in the first PLMN.

58. The apparatus of claim 56, wherein the first receiving unit is used for:
in case that the first indication information comprises the second information, receiving the second information transmitted from an application function (AF) in the first PLMN.

59. The apparatus of claim 56, wherein the apparatus further comprises a first determining unit, wherein in case that the first indication information comprises the second information, before transmitting the second indication information to the second SMF in the second PLMN, the first determining unit is used for:
determining a target data network access identifier (DNAI) based on the second information and Deployment information of EAS in the second PLMN;
transmitting a first request message carrying the target DNAI to a first access and mobility management function (AMF) in the first PLMN, wherein the first request message is used to request the first AMF to select an SMF in the second PLMN; and
determining the second SMF after receiving information of selected SMF transmitted from the first AMF.

60. The apparatus of claim 51, wherein the apparatus further comprises a third determining unit, wherein before transmitting the second indication information to the second SMF in the second PLMN, the third determining unit is used for:
in case that the second PLMN is a visited PLMN, transmitting a third request message to unified data management (UDM) in the first PLMN, wherein the third request message is used to request acknowledgement whether a user equipment (UE) is authorized to access the second PLMN; and
determining that the UE is authorized to access the second PLMN after receiving acknowledgement information replied from the UDM in the first PLMN.

61. An apparatus for relocating edge application server, used in a second session management function (SMF), comprising:
a second receiving unit, used for receiving second indication information transmitted from a first SMF in a first public land mobile network (PLMN), wherein the second indication information is used to indicate to relocate a source edge application server (EAS) in the first PLMN to a target EAS in a second PLMN;
a second configuring unit is used for configuring a second routing rule to the second user plane function (UPF) in the second PLMN based on the second indication information, wherein the second UPF is determined by the second SMF based on the second indication information, and the second routing rule is used to route uplink (UL) data to the target EAS; and
a second transmitting unit, used for transmitting acknowledgement information to the first SMF.

62. The apparatus of claim 61, wherein the second indication information comprises one or more types of the following information:
first information: an inter-PLMN relocation indication; or
second information: EAS Internet Protocol (IP) replacement information or information of the target EAS.

63. The apparatus of claim 62, wherein the apparatus further comprises a second selecting unit, wherein in case that the second indication information comprises the second information, before configuring the second routing rule to the second UPF in the second PLMN based on the second indication information, the second selecting unit is used for:
inserting or reselecting the second UPF based on the second information.

64. The apparatus of claim 62, wherein after receiving the second indication information transmitted from the first SMF in the first PLMN, the second configuring unit is further configured for:
in case that the second indication information comprises the second information and the second information is the EAS IP replacement information, configuring the EAS IP replacement information to the second UPF.

65. The apparatus of any of claims 61 to 64, wherein after receiving the second indication information transmitted from the first SMF in the first PLMN, the second configuring unit is further configured for:
configuring a third routing rule to the second UPF in the second PLMN based on the second indication information, wherein the third routing rule is used to route downlink data to a first UPF in the first PLMN.

66. The apparatus of any of claims 61 to 64, wherein the acknowledgement information comprises tunnel information corresponding to the second UPF.

67. An apparatus for relocating edge application server, used in an application function (AF), comprising:
a second obtaining unit, used for obtaining first indication information, wherein the first indication information is used to indicate to relocate a source edge application server (EAS) in a first public land mobile network (PLMN) to a target EAS in a second PLMN; and
a third transmitting unit, used for transmitting the first indication information.

68. The apparatus of claim 67, wherein the first indication information comprises one or more types of the following information:
first information: an inter-PLMN relocation indication and/or an identifier (ID) of the second PLMN; or
second information: EAS Internet Protocol (IP) replacement information or information of the target EAS.

69. The apparatus of claim 67 or 68, wherein the third transmitting unit is used for:
transmitting the first indication information to a network exposure function (NEF) in the first PLMN or a policy control function (PCF) in the first PLMN.

70. The apparatus of claim 68, wherein the third transmitting unit is used for:
in case that the first indication information comprises the second information, transmitting the second information to a first session management function (SMF) in the first PLMN.

71. The apparatus of claim 68, wherein the third transmitting unit is used for:
in case that the first indication information comprises the second information, transmitting the second information to a user equipment (UE) through an application layer.

72. An apparatus for relocating edge application server, used in a policy control function (PCF), comprising:
a third receiving unit, used for receiving first indication information, wherein the first indication information is used to indicate to relocate a source edge application server (EAS) in a first public land mobile network (PLMN) to a target EAS in a second PLMN; and
a fourth transmitting unit, used for transmitting a policy and charging control (PCC) rule carrying the first indication information to a first session management function (SMF) in the first PLMN based on the first indication information.

73. The apparatus of claim 72, wherein the third receiving unit is used for:
receiving the first indication information transmitted from an application function (AF) in the first PLMN; or
receiving the first indication information transmitted from a network exposure function (NEF) in the first PLMN.

74. The apparatus of claim 72, wherein the apparatus further comprises a generating unit, wherein before transmitting the PCC rule carrying the first indication information to the first SMF in the first PLMN, the generating unit is used for:
in case that the second PLMN is a visited PLMN, determining that a user equipment (UE) is authorized to access the visited PLMN, wherein the second PLMN is a PLMN where the target EAS is located; and
generating the PCC rule carrying the first indication information based on the first indication information.

75. The apparatus of any of claims 72 to 74, wherein the first indication information comprises one or more types of the following information:
first information: an inter-PLMN relocation indication and/or an identifier (ID) of the second PLMN; or
second information: EAS Internet Protocol (IP) replacement information or information of the target EAS.

76. A processor-readable storage medium storing a computer program, wherein the computer program is used for causing a processor to perform any of the methods of claims 1 to 25.
